# FASCICULE DE BREVET EUROPEEN

(11) **EP 3 883 737 B1**
(45) Date de publication et mention de la délivrance du brevet: **13.09.2023**
(21) Numéro de dépôt: 19829288.0
(22) Date de dépôt: 19.11.2019
(51) Int. Cl.: B29C 44/30, B29C 44/32, B29C 44/46

(54) **PROCÉDÉ ET SYSTÈME DE PRÉPARATION D'UN BLOC DE MOUSSE POLYURÉTHANE/POLYISOCYANURATE FIBRÉE D'UN MASSIF D'ISOLATION THERMIQUE D'UNE CUVE**
VERFAHREN UND SYSTEM ZUR HERSTELLUNG EINES POLYURETHAN/POLYISOCYANURAT-FASERIGEN SCHAUMSTOFFBLOCKS EINES WÄRMEISOLIERBLOCKS EINES TANKS
PROCESS AND SYSTEM FOR THE PREPARATION OF A POLYURETHANE/POLYISOCYANURATE FIBROUS FOAM BLOCK OF A THERMAL INSULATION BLOCK OF A TANK

(30) Priorité: 19.11.2018 FR 1871590
(43) Date de publication de la demande: 29.09.2021
(73) Titulaire: Gaztransport et Technigaz, 78470 Saint-Rémy-lès-Chevreuse (FR)
(72) Inventeur: DEWOLF, Laetitia, 78470 SAINT REMY LES CHEVREUSE (FR); DE COMBARIEU, Guillaume, 78470 SAINT REMY LES CHEVREUSE (FR)
(74) Mandataire: Loyer & Abello
(86) Numéro de dépôt international: PCT/FR2019/052748
(87) Numéro de publication internationale: WO 2020/104749

(56) Documents cités:
- EP-A1- 0 412 715
- FR-A1- 2 565 522
- US-A- 3 738 895
- US-A- 3 867 494

## Description

### Domaine technique

L'invention a pour objet un procédé de préparation de blocs de mousses de polyuréthane (PUR) et/ou polyisocyanurate (PIR) fibrées (contenant des fibres) à partir d'au moins un polyisocyanate et d'au moins un polyol, lesdits blocs de mousses étant utilisés au sein d'une cuve intégrée servant à accueillir des fluides extrêmement froids, dits cryogéniques, tels que du Gaz Naturel Liquéfié (GNL) ou du Gaz de Pétrole Liquéfié (GPL).

La présente invention concerne également un système pour la mise en oeuvre du procédé de préparation ainsi que les blocs de PUR et/ou PIR qui doivent présenter, compte tenu de leurs applications spécifiques, des caractéristiques mécaniques et thermiques très particulières, tout en étant le plus économique possible à produire.

La présente invention concerne enfin plus particulièrement les cuves étanches et thermiquement isolantes utilisant de telles mousses directement obtenues par ce procédé de préparation ainsi que les navires équipés de telles cuves.

### Arrière-plan technologique

La mousse de polyuréthane PUR est un isolant alvéolaire, composé de fines cellules emmagasinant un gaz pouvant être à faible conductivité thermique. La mousse PUR est utilisée dans de très nombreuses applications telles que l'industrie automobile en tant que mousse PUR souple ou dans l'isolation thermique en tant que mousse PUR rigide. La formation des mousses de type polyuréthane est bien connue de l'homme du métier. Sa formation implique une réaction multi-composants entre un polyol (composé porteur d'au moins deux groupements hydroxy), un polyisocyanate (composé porteur d'au moins deux fonctions isocyanate -NCO) et un agent d'expansion, également désigné par l'expression « agent gonflant ». Cette réaction de condensation est notamment catalysée par des composés à caractères basiques et/ou nucléophiles tels que les amines tertiaires ou les complexes de coordination métal-carboxylate tels que les sels d'étain ou de bismuth. Les polyols couramment utilisés dans la fabrication des mousses PUR sont des polyols polyéther ou des polyols polyester. Ainsi, un grand nombre de composés sont nécessaires à la formation de mousse PUR.

Les mousses de polyisocyanurate (PIR) et de polyuréthane/polyisocyanurate (PUR-PIR) sont également utilisées dans le bâtiment (la construction/rénovation) et présentent l'avantage d'apporter de meilleures propriétés anti-feu ainsi qu'une résistance à la compression plus élevée que les PUR. Le procédé de formation de ces mousses est similaire au procédé de formation des mousses PUR. En effet, l'obtention des mousses PUR, PIR et PUR-PIR dépend du ratio isocyanate/polyol.

L'obtention de mousses PUR, PIR et PUR-PIR est bien connue de l'homme du métier, néanmoins l'ajout de fibres implique des problèmes techniques particuliers, en particulier si l'on souhaite obtenir une mousse PUR, PIR ou PUR-PIR fibrée dans lequel les fibres sont dispersées de façon homogène dans le volume de mousse.

On connait du document US3867494 un procédé de production en continu d'une mousse d'uréthane renforcée avec des fibres de verre pour une utilisation multi-usage, ladite mousse présentant une forte résistance à la compression. Le procédé de fabrication consiste à exercer une contrainte à l'expansion avec des rouleaux mobiles, pour obtenir une mousse compressée à 25% par rapport à son expansion libre.

On connaît également un procédé de préparation dans lequel les composants nécessaires à l'obtention de la mousse PUR, PIR ou PUR/PIR imprègnent les fibres, généralement présentes sous forme de renforts tissés ou non tissés, puis le mélange des composants gonfle, éventuellement initié par un chauffage et/ou l'utilisation de catalyseurs, sous l'action de la polymérisation/réticulation des réactifs et de l'agent gonflant. Cette préparation est dite par « expansion libre » dans la mesure où l'expansion de la mousse fibrée n'est pas contrainte sur au moins un côté ou sur au moins une face d'expansion de sorte que le gonflement est libre sur ce côté ou cette face, à l'inverse d'un moule définissant un volume fini. Dans cette préparation, la mousse fibrée présente des cellules de forme aléatoire, c'est-à-dire de forme sphérique ou ovale s'étendant dans la ou les directions d'expansion laissées libres, et la répartition uniforme des fibres dans la mousse n'est pas contrôlée. Ainsi, une telle mousse présente des propriétés mécaniques et thermiques variables dans ses différentes sections, ce qui n'est pas acceptable lorsqu'on désire obtenir un bloc de mousse homogène, présentant classiquement des qualités mécaniques optimums suivant une direction prédéterminée du bloc de mousse fibrée.

C'est pourquoi il a été proposé, dans le secteur de la construction, de contraindre fortement l'expansion d'une mousse avec un laminateur double bande dans lequel l'expansion de la mousse est très fortement contrainte par les parois formant un tunnel, en particulier les parois horizontales, d'un tel laminateur de sorte que la mousse est comprimée pour présenter de bonnes propriétés mécaniques orientées dans le sens de la longueur ou de la largeur du tunnel du laminateur.

Toutefois, ce type de préparation n'est pas adapté à l'ajout de fibres dans la mousse car les mousses utilisant ce principe sont destinées à gonfler très rapidement pour parvenir en butée des parois du laminateur, pour obtenir une adhésion de la mousse sur les parements souples ou rigides placés entre la mousse et les parois du tunnel. En conséquence, l'imprégnation des fibres pour l'obtention d'une mousse fibrée homogène est très difficile à obtenir dans ce type de préparation. On peut citer du document FR 2 565 522 un procédé de production continue en masse d'un article en mousse renforcée de fibres présentant des propriétés d'isolation thermique pour une utilisation dans des conteneurs pour des gaz liquéfiés à température cryogénique (GNL). Ce procédé consiste à laminer au moins deux couches de longues fibres croisées les unes par rapport aux autres dans des directions aléatoires en présence d'une quantité déterminée de résine pulvérisée, à pulvériser une solution contrôlée d'une résine synthétique expansible sur le produit laminé, à comprimer le ruban de base avant le moussage jusqu'à ce que la solution expansible arrive à sa surface de telle sorte que l'air soit totalement expulsé des interstices entre les fibres, et à faire mousser la solution expansible simultanément avec une compression d'un laminateur exérçant une pression de 1,1 à 1,7. Ce procédé permet d'obtenir un matériau qui ne comprend pas d'alvéoles d'air et évite ainsi les fissures. Cependant, la forte contrainte à l'expansion au niveau des parois horizontales (celles supérieure et inférieure) a pour conséquence que les cellules, enfermant un gaz à faible conductivité thermique, présentent essentiellement une forme aplatie ou allongée dans le sens de la longueur et/ou de la largeur du bloc de mousse, d'où de très mauvaises performances mécaniques (tenue en compression) dans l'épaisseur du bloc de mousse. On peut également citer le document US 20040053035 qui divulgue une telle préparation.

Par ailleurs, du fait de l'hétérogénéité de la mousse fibrée obtenue, on est souvent contraint de découper un nouveau bloc au sein du bloc de mousse directement obtenu en sortie du laminateur, ceci ayant pour conséquence d'importantes pertes de matière et donc d'augmentation des coûts de production. Il en va de même dans le cas d'une expansion libre où la perte de matière est de l'ordre de 15% à 20%.

Il n'existe pas à l'heure actuelle de procédé de préparation économique d'un bloc de mousse de polyuréthane et/ou polyisocyanurate fibrée permettant d'obtenir un bloc présentant de très bonnes propriétés mécaniques dans l'épaisseur (ou la hauteur), du fait en particulier d'une parfaite homogénéité des fibres dans le bloc et d'une orientation adaptée (souhaitée suivant un axe parallèle à l'épaisseur du bloc de mousse) des cellules emmagasinant un gaz à faible conductivité thermique.

### Résumé

C'est dans ce contexte que la demanderesse est parvenue à mettre au point un procédé de production de mousses de polyuréthane et/ou polyisocyanurate contenant des fibres en quantité significative permettant à la fois l'obtention d'une mousse fibrée présentant d'excellentes propriétés mécaniques dans l'épaisseur, tout en conservant, voire en améliorant ses performances d'isolant thermique et en diminuant très significativement le coût de production du fait d'une parfaite homogénéité de la mousse fibrée (la perte de matière du bloc de mousse est ainsi minime, voire négligeable). L'invention est définie par la revendication de méthode 1, par la revendication de système 17 et par la revendication de produit 18.

La présente invention entend ainsi remédier aux lacunes de l'état de la technique en proposant une solution particulièrement efficace, très économique tout en étant simple à mettre en oeuvre, pour obtenir industriellement une mousse de PUR/PIR fibrée dont les propriétés mécaniques dans l'épaisseur sont optimales.

Il a été découvert par la demanderesse, après diverses études et analyses, une préparation d'un bloc de mousse de polyuréthane (PUR) et/ou polyisocyanurate (PIR) fibrée apte à résoudre les problèmes économiques et techniques des préparations actuelles, au regard des objectifs spécifiques liés à l'application finale d'un tel bloc de mousse.

Ainsi, la présente invention concerne un procédé de préparation d'un bloc de mousse de polyuréthane/polyisocyanurate fibrée convenant à un massif d'isolation thermique d'une cuve étanche et thermiquement isolante, le bloc de mousse de polyuréthane/polyisocyanurate fibrée étant composé de cellules fermées emmagasinant un gaz et se présentant sous la forme d'un parallélépipède d'une épaisseur E et d'une largeur L, le procédé de préparation comportant les étapes suivantes :
a) une étape de mélange de composants chimiques nécessaires à l'obtention d'une mousse de polyuréthane/polyisocyanurate, lesdits composants comportant des réactifs pour l'obtention de polyuréthane/polyisocyanurate, au moins un agent gonflant consistant en un agent d'expansion physique et/ou chimique et éventuellement au moins un catalyseur de réaction et/ou un émulsifiant,
b) une étape d'imprégnation de fibres par le susdit mélange de composants chimiques via une distribution de liquide contrôlée sur la largeur L sur une bande de transport, les fibres ayant été préablement déposées sur la bande de transport et représentant entre 1% et 60% en masse,
c) une étape de formation et d'expansion de la mousse de polyuréthane/polyisocyanurate fibrée, ladite expansion de la mousse de polyuréthane/polyisocyanurate fibrée étant physiquement contrainte par les parois d'un laminateur double bande formant un tunnel, de section rectangulaire avec une distance entre les parois disposées latéralement égale à L et une distance entre les parois disposées horizontalement égale à E, enfermant ainsi la mousse fibrée en expansion de manière à obtenir le susdit bloc de mousse de polyuréthane/polyisocyanurate fibrée.
le procédé selon l'invention se caractérisant en ce que le positionnement des parois du tunnel du laminateur double bande est défini, par exemple à partir d'une loi d'évolution du volume d'expansion, de telle sorte que la contrainte à l'expansion de la mousse de polyuréthane/polyisocyanurate fibrée conduit à un volume de mousse de polyuréthane/polyisocyanurate fibrée, en sortie du laminateur à double bande, représentant entre 92% et 99% du volume d'expansion de cette même mousse de polyuréthane/polyisocyanurate fibrée dans le cas d'une expansion libre, sans la contrainte des parois d'un tel laminateur à double bande.

On entend par l'expression « cette même mousse » le fait que, pour comparer les volumes d'expansion, on considère exactement les mêmes quantités de matières (composants chimiques nécessaires à l'obtention d'une mousse de polyuréthane/polyisocyanurate et au moins de l'agent gonflant) dans le cas du procédé selon l'invention, avec le laminateur double bande, et dans le cas de comparaison volumique, à savoir le cas de l'expansion libre (sans contrainte des parois du laminateur à double bande, typiquement la paroi supérieure d'un tel laminateur).

Dans la présente invention, on entend par le terme « une distribution de liquide contrôlée sur la largeur L » le fait que le mélange liquide (réactifs et au moins l'agent gonflant) atteint les fibres sur une section de largeur L dès sa distribution sur les fibres ou après un temps d'écoulement et d'étalement rhéologique sur les fibres, ce temps étant inférieur au temps de crème. Ainsi l'imprégnation des différents renforts de fibres sur la bande de transport s'opèresur toute la largeur L avant l'expiration du temps de crème. Cette distribution contrôlée peut nécessiter plus ou moins de points de distribution répartis sur la largeur de la bande de transport : par exemple un seul point de distribution central si le mélange est très fluide et s'écoule très rapidement pour occuper toute la largeur de la bande de transport avant l'expiration du temps de crème, ou au contraire un grand nombre de points de distribution faiblement espacés si le mélange est très visqueux et s'écoule très peu après sa distribution sur les fibres.

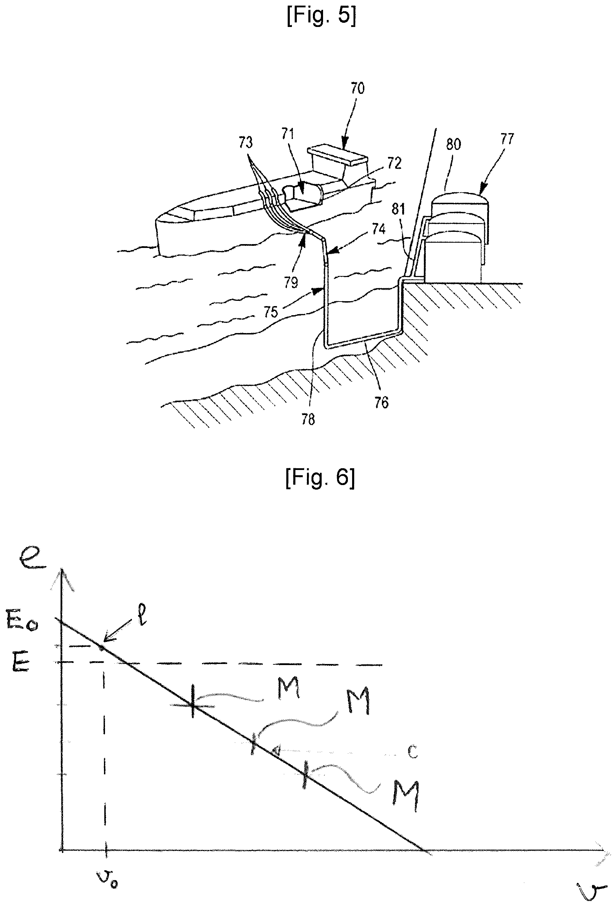

On entend par « le positionnement des parois du tunnel du laminateur double bande est défini à partir d'une loi d'évolution du volume d'expansion » le fait que les parois du tunnel du laminateur double bande soient positionnées en fonction du débit du mélange de composants chimiques et/ou de la vitesse de convoyage de la bande de transport, de manière à enfermer un volume trop faible pour que la mousse de polyuréthane/polyisocyanurate fibrée réalise une expansion libre et que ce volume représente entre 92% et 99% du volume qui aurait été nécessaire pour que cette même mousse de polyuréthane/polyisocyanurate fibrée réalise une expansion libre, sans la contrainte des parois d'un tel laminateur à double bande. Ainsi, par exemple la hauteur E de la bande supérieure horizontale du tunnel du laminateur double bande peut être, comme représenté à la figure 6, fonction notamment de la vitesse de convoyage de la bande de transport et/ou fonction du débit du mélange de composants chimiques.

On entend par l'expression « cellule fermées emmagasinant un gaz », une cellule fermée renfermant un gaz, de préférence un gaz à faible conductivité thermique, le gaz provenant de l'agent gonflant, soit par réaction chimique de celui-ci lorsque cet agent est chimique, classiquement du dioxyde de carbone (CO₂) lorsque l'agent gonflant chimique consiste en de l'eau, soit par un agent gonflant physique tels que par exemple le diazote (N₂), le dioxygène (O₂), le dioxyde de carbone, les hydrocarbures, les chloroflurocarbures, les hydrochlorocarbures, les hydrofluorocarbures, les hydrochlorofluorocarbures, et leurs mélanges. Les agents gonflants physiques tels que l'azote moléculaire N₂ ou le CO₂ se trouvent sous forme de gaz. Ces gaz sont dispersés dans la masse liquide de copolymère par exemple sous haute pression à l'aide d'un mélangeur statique. En dépressurisant le système, la nucléation et la croissance des bulles génèrent une structure cellulaire fermée emmagasinant le gaz.

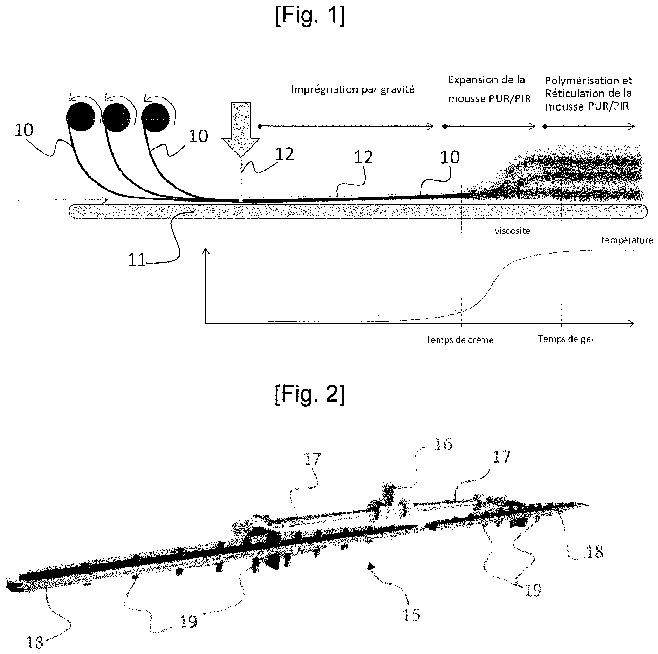

On entend par « bande de transport » la bande de transport, par exemple représentée sur la figure 1, qui amène l'ensemble formé du mélange de composants, de l'agent gonflant et des fibres au laminateur double bande.

Grâce au paramétrage spécifique de la contrainte à l'expansion de la mousse de PUR/PIR fibrée, on obtient d'une part un bloc de mousse de PUR/PIR fibrée dans lequel au moins 60%, généralement plus de 80% voire plus de 90%, des cellules emmagasinant un gaz à faible conductivité thermique s'étendent longitudinalement suivant un axe parallèle à l'axe de l'épaisseur E du bloc de mousse et on contribue d'autre part à une parfaite homogénéité du bloc fibrée, autrement dit les fibres sont réparties de façon homogène dans le bloc de mousse. Ces deux caractéristiques principales permettent d'obtenir un bloc de mousse fibrée présentant d'excellentes propriétés mécaniques suivant l'épaisseur E, telles que cela est démontré par des tests conduits par la demanderesse et présentés dans le tableau 5 pour la résistance en compression.

Egalement, grâce au procédé selon l'invention, on réalise des économies très substantielles, le bloc de mousse fibrée étant homogène et présentant intrinsèquement les excellentes propriétés mécaniques recherchées suivant l'axe E, il n'y a pas lieu de réaliser de découpe ultérieure de ce bloc afin d'enlever des parties d'extrémité dans lesquelles les fibres ne seraient pas présentes et/ou les cellules non orientées longitudinalement suivant l'axe E. Ainsi, la quantité de perte matière dans le procédé de préparation selon l'invention s'établit entre 0 et 10%, plus généralement inférieure à 5%.

Enfin, les propriétés thermiques du bloc de mousse fibrée sont au moins égales à celles des blocs de mousse fibrée de l'état de la technique, plus précisément le bloc de mousse présente, dans l'épaisseur E, une conductivité thermique inférieure à 40mW/m.K (milliwatt par mètre par Kelvin), soit 0,04 W/m.K, de préférence inférieure à 35 mW/m.K, de manière encore plus préférée inférieure à 30 mW/m.K, mesurée à 20°C.

Ainsi, le bloc de mousse fibrée obtenu selon l'invention se caractérise par sa structure contrôlée et uniforme et ses propriétés mécaniques, en particulier de tenue en fatigue et de résistance à l'écrasement dans le sens de l'épaisseur (mesurée selon la norme ISO 844), compatibles avec une utilisation dans les cuves intégrées pour le stockage et/ou le transport de liquide très froid tels que le GNL ou le GPL.

L'utilisation, dans la composition selon l'invention, d'un agent gonflant chimique, peut être couplée à celle d'un agent d'expansion physique. Dans ce cas, l'agent d'expansion physique est de préférence mélangé sous forme liquide ou supercritique avec la composition de (co)polymère moussable puis converti en phase gazeuse lors de l'étape d'expansion de la mousse de PUR/PIR.

Les agents gonflants chimiques et physiques sont bien connus de l'homme du métier qui choisit les uns et les autres, dans les quantités appropriées, en fonction de la mousse de PUR/PIR qu'il désire obtenir.

Par polyols on entend toute structure carbonée portant au moins deux groupements OH.

L'obtention des mousses PUR, PIR et PUR-PIR dépendant du ratio isocyanate/polyol, on obtiendra une mousse PUR, PIR ou PUR-PIR selon ce ratio. Lorsque le ratio entre un composant polyol et un composant isocyanate est :
- compris entre 1:1 et 1:1,3 on obtiendra une mousse polyuréthane PUR,
- compris entre 1:1,3 et 1:1,8 on obtiendra une mousse polyuréthane PUR-PIR,
- compris entre 1:1,8 et 1:2,5 on obtiendra une mousse polyuréthane PIR.

Les polyisocyanates appropriés pour la formation de mousse PUR, PIR et PUR-PIR sont connus de l'homme du métier et comprennent par exemple les polyisocyanates aromatiques, aliphatiques, cycloaliphatiques, arylaliphatiques et leurs mélanges, avantageusement les polyisocyanates aromatiques.

Des exemples de polyisocyanates appropriés dans le cadre de la présente invention incluent les isocyanates aromatiques tels que les isomères 4,4'-, 2,4'- et 2,2'- du diphenylmethane diisocyanate (MDI), tout composé issu de la polymérisation de ces isomères, le toluène 2,4- et 2,6-diisocyanate (TDI), le m- et p- phenylène diisocyanate, le naphtalène-1,5-diisocyanate; les isocyanates aliphatiques, cycloaliphatiques, arylaliphatiques tels que le 1,6-hexamethylene diisocyanate (HDI), l'isophorone diisocyanate (IPDI), le 4,4'-dicyclohexylmethane diisocyanate (H12MDI), le 1,4-cyclohexane diisocyanate (CHDI), le bis(isocyanatomethyl)cyclo-hexane (H6XDI,DDI) et le tetramethyxylylene diisocyanate (TMXDI). Il est également possible d'utiliser des mélanges quelconques de ces diisocyanates. De manière avantageuse les polyisocyanates sont les isomères 4,4'-, 2,4'- et 2,2'- du diphenylmethane diisocyanate (MDI).

De manière générale, il est connu d'ajouter lors de la formation des mousses PUR, PIR ou PUR-PIR, au mélange comprenant le polyol, le polyisocyanate et de l'agent gonflant, un catalyseur de réaction qui pourra par exemple être choisi parmi les amines tertiaires, telles que la N,Ndiméthylcyclohexylamine ou la N,N-diméthylbenzylamine ou parmi les composés organo-métalliques à base de bismuth, de potassium ou d'étain.

D'autres caractéristiques avantageuses de l'invention sont présentées succinctement ci-dessous :
- avantageusement, le susdit volume de la mousse de polyuréthane/polyisocyanurate fibrée représente entre 95% et 99% du volume d'expansion de cette même mousse fibrée dans le cas d'une expansion libre, sans la contrainte des parois d'un laminateur à double bande ;
- avantageusement, lors de l'étape d'imprégnation de mâts de fibres, le susdit mélange de composants présente une viscosité comprise entre 30 mPa.s et 1500 mPa.s, de préférence entre 50 mPa.s et 700 mPa.s ;

Ce choix de viscosité permet une bonne et complète imprégnation de l'ensemble des fibres dans le temps de crème donné par les composants chimiques et au moins l'agent gonflant pour le commencement de l'expansion de mousse de PUR/PIR.
- selon une possibilité offerte par l'invention, non représentée sur les figures annexées, juste après l'étape d'imprégnation des mâts de fibres, on applique sur le mélange de composants et d'au moins l'agent gonflant imprégnant les fibres un système d'application de pression (pouvant être par exemple un système de rouleaux, de type désigné « nip roll » en anglais) destiné à appliquer une pression sur la face supérieure de l'ensemble constitué du susdit mélange et des fibres. Ce système de pression permet d'une part de planifier la face supérieure de cet ensemble et, par la pression exercée sur l'ensemble, contribue à favoriser l'imprégnation des fibres dans le susdit mélange. Ce système de pression peut consister en un simple ou un double rouleau, dont les positions relatives, au-dessus de l'ensemble liquide, et éventuellement en dessous du support de mousse, sont réglées de telle manière que l'ensemble liquide est contraint de s'étaler de manière parfaitement uniforme. Ainsi, ce faisant, on obtient, en tout point de la section définie par l'espacement entre les deux rouleaux ou du rouleau supérieur et de la bande de transport, une quantité équivalente de l'ensemble liquide. Autrement dit, ce système de pression a pour principal objet de compléter le dispositif de dispense de liquide en ce qu'il contribue à uniformiser, dans l'épaisseur/largeur, l'ensemble liquide avant l'essentiel de son expansion.
- selon un mode d'exécution, à l'issue de la préparation selon l'invention, le bloc de mousse fibrée présente au moins 80% des susdites cellules emmagasinant un gaz présentant une forme allongée ou étirée suivant un axe parallèle à l'axe de l'épaisseur E du bloc de mousse de polyuréthane/polyisocyanurate fibrée ;
- de préférence, le bloc de mousse fibrée présente au moins 90%, de préférence au moins 95%, des susdites cellules emmagasinant un gaz présentant une forme allongée ou étirée suivant un axe parallèle à l'axe de l'épaisseur E du bloc de mousse de polyuréthane/polyisocyanurate fibrée ;
- selon un mode d'exécution de l'invention, les fibres consistent en de la fibre de verre ou en des fibres de carbone, de préférence des fibres de verre ;
- de préférence, les fibres se présentent sous forme d'une pluralité de couches de renforts tissées ou non tissées, de préférence non tissées et isotropes, s'étendant suivant un plan d'orientation perpendiculaire à l'épaisseur E. Ainsi les fibres peuvent se présenter sous au moins trois formes distinctes :
   - sous la forme d'au moins un tissu de fibres, dans lequel les fibres sont parfaitement alignées selon au moins une direction, autrement dit les fibres présentent au moins une direction privilégiée de fibres,
   - sous la forme d'au moins un mat de fibres, dans lequel les fibres ne présentent pas d'orientation définie, autrement dit ces fibres sont orientées de façon isotrope essentiellement suivant le plan principal de la couche du mat
   - sous la forme d'une alternance ces deux types précédents de fibres.
- selon un autre mode de réalisation, les fibres sont disposées sur toute la largeur L et l'étape b) d'imprégnation des fibres par le mélange de composants, pour obtenir une mousse de polyuréthane/polyisocyanurate fibrée, et d'un agent gonflant s'opère, via un distributeur de liquide contrôlé, simultanément sur toute la largeur L ;

On entend par le terme « simultanément » le fait que le mélange liquide (réactifs et au moins l'agent gonflant) atteint les fibres, sur une section de largeur L, au même moment tout le long de cette section de sorte que l'imprégnation des différents renforts de fibres commence ou s'opère, suivant l'épaisseur (ou la hauteur) du bloc de mousse et pour une même section de largeur, au même instant ou à la même vitesse.
- avantageusement, l'agent gonflant consiste en un agent d'expansion physique et/ou chimique, de préférence une combinaison des deux types.
- de façon préférentielle, l'agent d'expansion physique est choisi parmi les alcanes et les cycloalcanes ayant au moins 4 atomes de carbone, les éthers dialkyls, les esters, les cétones, les acétals, les fluoroalcanes, les fluoro-oléfines ayant entre 1 et 8 atomes de carbone et les tétraalkylsilanes ayant entre 1 et 3 atomes de carbone dans la chaine alkyle, en particulier le tétraméthylsilane, ou un mélange de ceux-ci.

Dans cette hypothèse, à titre d'exemple de composés, il pourra s'agir de propane, n-butane, d'isobutane, cyclobutane, n-pentane, d'isopentane, cyclopentane, cyclohexane, diméthyle éther, méthyle éthyle éther, méthyle butyle éther, méthyle formate, d'acétone et des fluoroalcanes ; les fluoroalcanes étant choisis sont ceux ne dégradant pas la couche d'ozone, par exemple le trifluoropropane, le 1,1,1,2-tétrafluoroéthane, le difluoroéthane et l'heptafluoropropane. Des exemples de fluoro-oléfines incluent le 1-chloro-3,3,3-trifluoropropène, le 1,1,1,4,4,4-hexafluorobutène (par exemple le HFO FEA1100 commercialisé par la société Dupont).

Selon un mode d'exécution préféré de l'invention, l'agent d'expansion physique choisi est le 1,1,1,3,3-pentafluoropropane , ou HFC-245fa, (commercialisé par la société Honeywell, le 1,1,1,3,3-pentafluorobutane, ou 365mfc, (par exemple le solkane^{®} 365mfc commercialisé par la société Solvay), le 2,3,3,3-tétrafluoroprop-1-ene, le 1,1,1,2,3,3,3-heptafluoropropane (également désigné internationalement en tant que le HFC-227ea, par exemple commercialisé par la société Dupont), le 1,1,1,4,4,4-hexafluorobutène (par exemple le HFO FEA1100 commercialisé par la société Dupont), le trans- 1-chloro-3,3,3-trifluoropropene (solstice LBA - société Honeywell) ou un mélange de ceux-ci.
- avantageusement, l'agent d'expansion chimique consiste en de l'eau.
   - de préférence le gaz est à faible conductivité thermique.
   - avantageusement, les réactifs comportent :
      - un composant isocyanate comportant un ou plusieurs composés isocyanates, lesdits composés isocyanates présentant une viscosité comprise entre 100 et 3000 mPa.s à température ambiante, et
      - un composant polyol comportant un ou plusieurs composés polyols, lesdits composés polyols présentant une viscosité comprise entre 200 et 3000 mPa.s à température ambiante ;
   - selon une possibilité offerte par l'invention, dans ce mode d'exécution, lors de l'étape a) de mélange de composants chimiques, du gaz de nucléation (de l'air) est incorporé à au moins un composé polyol, de préférence à l'aide d'un mélangeur statique/dynamique sous une pression entre 20 et 250 bars, le gaz de nucléation représentant entre 0 et 50% en volume de polyol, de préférence entre 0,05% et 20% en volume du volume de polyol ;

De préférence, selon un mode de réalisation préféré de l'invention, le mélange final des flux de polyols, isocyanate et/ou agent gonflant a lieu dans une tête de mélange à basse pression (< 20 bars) ou haute pression (> 50 bars) à l'aide d'un mélangeur dynamique ou statique.
- de préférence, lors de l'étape a) de mélange des composants chimiques, la température de chacun des réactifs pour l'obtention de polyuréthane/polyisocyanurate est comprise entre 10°C et 40°C, de préférence entre 15°C et 30°C ;
- selon une possibilité offerte par l'invention, on ajoute en outre au mélange, à l'étape a), un retardateur de flamme organophosphoré, avantageusement le triéthylphosphate (TEP), le tris(2-chloroiso-propyl) phosphate (TCPP), du tris(1,3-dichloroisopropyl) phosphate (TDCP), du tris(2-chloroéthyl) phosphate ou du tris(2,3-dibromopropyl) phosphate, ou un mélange de ceux-ci, ou un retardateur de flamme inorganique, avantageusement du phosphore rouge, du graphite expansible, un hydrate d'oxyde d'aluminium, un trioxyde d'antimoine, un oxyde d'arsenic, un polyphosphate d'ammonium, un sulfate de calcium ou des dérivés d'acide cyanurique, un mélange de ceux-ci.

On pourra également envisager que le retardateur de flamme utilise de l'éthane phosphonate diéthyle (DEEP), du phosphate triéthyle (TEP), du propyle phosphonate diméthyle (DMPP) ou du phosphate crésyl diphényle (DPC).

Ce retardateur de flamme, lorsqu'il est présent dans la composition selon l'invention, se trouve dans une quantité comprise entre 0,01% et 25% de la masse du ou des composés polyols.
- de préférence, les fibres représentent entre 2% et 30% de la masse du susdit mélange de composants ou de la masse totale.

L'invention se rapporte aussi à un système de préparation d'un bloc de mousse de polyuréthane/polyisocyanurate fibrée d'un massif d'isolation thermique convenant à une cuve étanche et thermiquement isolante, pour la mise en oeuvre du procédé précédemment décrit, comportant :
- un dispositif réactionnel recevant des composants chimiques nécessaires à l'obtention d'une mousse de polyuréthane/polyisocyanurate, lesdits composants chimiques comportant des réactifs pour l'obtention de polyuréthane/polyisocyanurate, au moins un agent gonflant consistant en un agent d'expansion physique et/ou chimique et éventuellement au moins un catalyseur de réaction et/ou un émulsifiant.
- un distributeur des susdits composants sur des fibres, de préférence sous forme d'une pluralité de mâts de fibres, pour l'imprégnation de ces dernières par ces composants, de préférence via un distributeur de liquide contrôlé permettant l'imprégnation des fibres simultanément sur toute leur largeur L,
- une bande de transport pour réceptionner et transporter les susdits composants et les fibres depuis l'imprégnation de ces fibres par lesdits composants jusqu'à la formation du bloc de mousse de polyuréthane/polyisocyanurate fibrée, le bloc de mousse de polyuréthane/polyisocyanurate fibrée formé se présentant sous la forme d'un parallélépipède d'une épaisseur E et d'une largeur L,
- un laminateur double bande formant un tunnel, de section rectangulaire avec une distance entre les parois disposées latéralement égale à L et une distance entre les parois disposées horizontalement égale à E, enfermant ainsi la mousse fibrée en expansion de manière à obtenir le bloc de mousse de polyuréthane/polyisocyanurate fibrée.
le système selon l'invention se caractérisant en ce que le positionnement des parois du tunnel du laminateur double bande est défini, par exemple à partir d'une loi d'évolution du volume d'expansion, de telle sorte que la contrainte à l'expansion de la mousse de polyuréthane/polyisocyanurate fibrée conduit à un volume de mousse de polyuréthane/polyisocyanurate fibrée, en sortie du laminateur à double bande, représentant entre 92% et 99%, de préférence entre 95% et 99%, du volume d'expansion de cette même mousse de polyuréthane/polyisocyanurate fibrée dans le cas d'une expansion libre, sans la contrainte des parois d'un laminateur à double bande.

On doit noter que toutes les caractéristiques présentées précédemment en lien avec le procédé de préparation d'un bloc de mousse de polyuréthane/polyisocyanurate fibrée selon l'invention trouvent à s'appliquer, le cas échéant, au système de préparation d'un bloc de mousse de polyuréthane/polyisocyanurate fibrée succinctement défini ci-dessus.

L'invention concerne aussi un bloc de mousse de polyuréthane/polyisocyanurate fibrée convenant à un massif d'isolation thermique d'une cuve étanche et thermiquement isolante, directement obtenu par le procédé de préparation susmentionné sans arasage ultérieur, soit le bloc de mousse de polyuréthane/polyisocyanurate fibrée contenant entre 1% et 60% en masse de fibres, de préférence entre 2% et 30%, réparties de manière homogène dans ledit bloc, présentant une largeur L d'au moins dix centimètres, avantageusement comprise entre 10 et 500 centimètres, et une épaisseur E d'au moins dix centimètres, avantageusement comprise entre 10 et 100 centimètres, le bloc de mousse de polyuréthane/polyisocyanurate fibrée étant composé de cellules emmagasinant un gaz, avantageusement à faible conductivité thermique. Ce bloc de mousse se caractérisant en ce que son volume représente entre 92% et 99%, de préférence entre 95% et 99%, du volume d'expansion de cette même mousse de polyuréthane/polyisocyanate fibrée dans le cas d'une expansion libre, sans la contrainte des parois d'un laminateur double bande formant un tunnel de section rectangulaire, et en ce qu'au moins 60%, de préférence au moins 80% et de manière encore préférée au moins 90%, des susdites cellules emmagasinant un gaz, présentent une forme allongée ou étirée suivant un axe parallèle à l'axe de l'épaisseur E du bloc de mousse de polyuréthane/polyisocyanurate fibrée.

On entend par l'expression « réparties de manière homogène » le fait que les fibres sont présentes sensiblement (+/- 3%, voire plutôt +/- 2%) dans le même pourcentage en masse dans toutes les zones du bloc de mousse selon l'invention.

On entend par l'expression « directement obtenu par le procédé de préparation susmentionné sans arasage ultérieur » le fait que les surfaces extérieures latérales du bloc de mousse sont des peaux continues ayant été en contact avec les parois du laminateur à double bande et qui n'ont pas été coupées ou fraisées, hormis éventuellement les surfaces d'extrémité longitudinales. Ainsi, les pertes de matière sont minimes.

Un tel bloc de mousse présente intrinsèquement des caractéristiques différentiantes par rapport à ceux préparés selon les techniques de préparation antérieures. On peut noter que les caractéristiques se rapportant à la nature ou à la quantité des différents éléments présentés ci-dessus en lien avec le procédé de préparation du bloc de mousse fibrée peuvent définir, le cas échéant, plus précisément le bloc de mousse PUR/PIR fibrée selon l'invention.

Avantageusement, la masse volumique dudit bloc de mousse est comprise entre 50 et 300 kg/m3, de préférence comprise entre 70 et 170 kg/m³.

L'invention concerne également une cuve étanche et thermiquement isolante intégrée dans une structure porteuse, comportant une cuve étanche et thermiquement isolante comprenant au moins une membrane métallique étanche composée d'une pluralité de virures métalliques ou plaques métalliques pouvant comporter des ondulations et un massif thermiquement isolant comportant au moins une barrière thermiquement isolante adjacente à ladite membrane,

La cuve selon l'invention se caractérise en ce que le massif thermiquement isolant comporte le bloc de mousse de polyuréthane/polyisocyanurate fibrée décrit succinctement ci-dessus.

Cette cuve comporte une pluralité de blocs de mousse de polyuréthane/polyisocyanurate fibrée directement obtenu par le procédé de préparation susmentionné.

Enfin, l'invention se rapporte également à un navire pour le transport d'un produit liquide froid, le navire comportant une double coque et une cuve étanche et thermiquement isolante telle que décrite succinctement ci-dessus, disposée dans la double coque.

Avantageusement, un tel navire comprend au moins une cuve étanche et isolante telle que décrite ci-dessus, ladite cuve comportant deux barrières d'étanchéité successives, l'une primaire au contact avec un produit contenu dans la cuve et l'autre secondaire disposée entre la barrière primaire et une structure porteuse, de préférence constituée par au moins une partie des parois du navire, ces deux barrières d'étanchéité étant alternées avec deux barrières thermiquement isolantes ou une unique barrière thermiquement isolante disposée entre la barrière primaire et la structure porteuse.

De telles cuves sont désignées classiquement en tant que cuves intégrées suivant le code de l'Organisation Maritime Internationale (IMO), telles que par exemple des cuves de type NO 96^{®} ou MARK III^{®}.

De préférence, la cuve contient un Gaz Naturel Liquéfié (GNL) ou un Gaz Liquéfié (GL).

### Brève description des figures

. La description qui va suivre est donnée uniquement à titre illustratif et non limitatif en référence aux figures annexées, dans lesquelles :
La figure 1 est une vue schématique illustrant les différentes étapes du procédé de préparation selon l'invention ;
La figure 2 est une représentation schématique d'un mode de réalisation d'un distributeur de liquide contrôlé selon l'invention ;
La figure 3 est une photo prise au microscope à balayage électronique illustrant les cellules du bloc de mousse de polyuréthane/polyisocyanurate fibrée selon l'invention ;
La figure 4 est une vue schématique de deux ensembles de panneaux d'isolation thermique, fixés l'un sur l'autre, formant respectivement un espace primaire et un espace secondaire d'isolation pour une cuve, ces panneaux étant constitués par une pluralité de blocs de mousse de polyuréthane/polyisocyanurate fibrée selon l'invention ;
La figure 5 est une représentation schématique écorchée d'une cuve de navire méthanier, dans laquelle sont installés les deux ensembles de panneaux d'isolation thermique du type de ceux représentés sur la figure 4, et d'un terminal de chargement/déchargement de cette cuve.
La figure 6 est une représentation schématique d'une loi d'évolution du volume d'expansion d'un bloc de mousse sur une bande de convoyage en fonction de la vitesse de convoyage.

### Description des modes de réalisation

De préférence, la préparation du PUR/PIR fibré selon l'invention est réalisée en présence de catalyseurs permettant de promouvoir la réaction isocyanate-polyol. De tels composés sont décrits par exemple dans le document de l'état de la technique intitulé « Kunststoffhandbuch, volume 7, Polyuréthane », Imprimerie Carl Hanser, 3ème édition 1993, chapitre 3.4.1. Ces composés comprennent des catalyseurs à base amine et des catalyseurs à base de composés organiques.

De préférence, la préparation du PUR/PIR fibré selon l'invention est réalisée en présence d'un ou plusieurs stabilisants destinés à promouvoir la formation de structures cellulaires régulières pendant la formation de la mousse. Ces composés sont bien connus de l'homme du métier et, à titre d'exemple, on peut citer les stabilisants de mousse comprenant des silicones tels que les copolymères siloxane-oxyalkylène et les autres organopolysiloxanes.

L'homme du métier connaît les quantités de stabilisants, entre 0,5% et 4% de la masse du ou des composés polyols, à utiliser en fonction des réactifs envisagés.

Selon une possibilité offerte par l'invention, lors de l'étape a), le mélange de composants chimiques peut inclure des plastifiants, par exemple des esters polybasiques, préférentiellement dibasiques, des acides carboxyliques avec des alcools monohydriques, ou consister en des plastifiants polymériques tels que des polyesters d'acides adipique, sébacique et/ou phtalique. L'homme du métier, en fonction des réactifs utilisés, sait quelle quantité de plastifiants envisagée, classiquement de 0,05% à 7,5% de la masse du ou des composés polyols.

Des charges organiques et/ou inorganiques, en particulier des charges de renforcement, peuvent également être envisagées dans le mélange de composants chimiques telles que des minéraux siliceux, des oxydes métalliques (par exemple kaolin, oxydes de titane ou de fer) et/ou des sels métalliques. La quantité de ces charges, si elles sont présentes dans le mélange, est classiquement comprise entre 0,5% et 15% de la masse du ou des composés polyols.

Il doit être noté que la présente invention n'entend pas ici ajouter un enseignement technique à la formation d'une mousse de PUR/PIR, tant au niveau de la nature des composants chimiques essentiels et des agents fonctionnels optionnels que de leurs quantités respectives. L'homme du métier sait comment obtenir différents types de mousse de PUR/PIR fibrée et la présente préparation se rapporte, à partir d'un traitement en contrainte spécifique de la mousse en expansion dans un laminateur double bande, à des choix particuliers pour améliorer soit le procédé de préparation, par exemple par des sélections adaptées de températures, de plages de viscosités des composants, d'une distribution spécifique de ces composants ou d'une vitesse d'avancement de la bande de transport, soit les qualités générales du produit fini, par exemple par le choix de composants chimiques présentant des fonctions réactives particulières, d'agents gonflants ou de fibres particuliers, ou encore par le choix d'agents fonctionnels particuliers. Ainsi, la présente invention, telle qu'exposée ici, ne vise pas en premier lieu une nouvelle préparation chimique de mousse de PUR/PIR fibrée mais bien une nouvelle préparation d'un bloc de mousse de PUR/PIR fibrée utilisant un laminateur double bande.

Ainsi, comme on peut le voir sur la figure 1, une pluralité de renforts de fibres 10 sont déroulés et amenés suivant un alignement parallèle entre eux sur ou au-dessus d'une bande de transport 11 destinée à conduire ces renforts 10 et les composants formant la mousse de PUR/PIR. En effet, l'imprégnation des renforts de fibres 10 se fait ici par gravité, c'est-à-dire que l'on coule, depuis un distributeur de liquide situé au-dessus des renforts de fibre 10, le mélange 12 de composants chimiques, d'agent(s) gonflant(s) et d'éventuels autres agents fonctionnels utilisés pour l'obtention de la mousse de PUR/PIR, directement sur les fibres 10.

Ainsi, le susdit mélange 12 doit imprégner l'intégralité des renforts de fibres 10, de façon bien homogène, au cours du temps de crème de sorte que le démarrage de l'expansion de la mousse de PUR/PIR ait lieu après ou au plus tôt juste au moment où les renforts de fibres 10 sont bien tous imprégnés par le mélange 12. Ce faisant, l'expansion de la mousse PUR/PIR est réalisée en conservant une homogénéité parfaite des fibres 10 dans le volume du bloc de mousse PUR/PIR.

Le temps de crème des composants du mélange 12 pour former la mousse PUR/PIR est connu de l'homme du métier et choisi de telle manière que la bande de transport 11 amène l'ensemble formé du mélange 12 de composants, de l'agent gonflant et des fibres 10 au laminateur double bande, non représenté sur les figures annexées, alors que l'expansion de la mousse vient juste de commencer, autrement dit l'expansion de la mousse PUR/PIR se termine dans le laminateur à double bande, le système de pression, à l'aide d'un ou de deux rouleaux, étant éventuellement disposé avant le laminateur double bande (soit entre la zone d'imprégnation du mélange sur les fibres et le laminateur double bande). Plus précisément, l'expansion du volume de la mousse est réalisée dans le laminateur à double bande lorsque le volume d'expansion de cette mousse atteint entre 30% et 60% du volume d'expansion de cette même mousse lorsque l'expansion est laissée libre, soit sans aucune contrainte sur la surface supérieure du mélange 12 et des fibres 10. Ce faisant, le laminateur à double bande contraint l'expansion de la mousse de PUR/PIR dans sa deuxième phase d'expansion, lorsque celle-ci est proche ou relativement proche de son expansion maximale, c'est-à-dire lorsque son expansion amène la mousse à proximité de l'ensemble des parois, formant un tunnel de section rectangulaire ou carrée, du laminateur double bande. Selon une manière différente de présenter les choix spécifiques de la préparation selon l'invention, le point de gel du mélange de composants, c'est-à-dire le moment où au moins 60% de la polymérisation du mélange de composants est atteint, autrement dit 70% à 80% de l'expansion volumique maximale du mélange, a lieu impérativement dans le laminateur double bande, éventuellement dans la deuxième moitié de la longueur du laminateur double bande (soit plus proche de la sortie du laminateur que de l'entrée de ce dernier).

Un aspect important de la préparation selon l'invention réside dans la bonne imprégnation des fibres 10 qui doit être atteinte avant, ou juste avant, le temps de crème du mélange 12 de composants destiné à obtenir la mousse de PUR/PIR. Pour ce faire, principalement deux caractéristiques sont requises : tout d'abord un choix de domaine spécifique de viscosité pour le mélange 12 de composants de manière à assurer une bonne pénétration du mélange 12 dans, ou au travers de, toutes les couches de renforts de fibres 10, et ce au plus pendant le temps de crème dudit mélange 12 de composants, et d'autre part de préférence par une distribution simultanée, sur toute la largeur L des renforts de fibres 10, de ce mélange 12 de composants de sorte que l'imprégnation des fibres 10 se réalise concomitamment sur toute la section de largeur L.

Concernant cette fonction de distribution simultanée du mélange 12 de composants chimiques et d'agent gonflant sur toute la largeur L des renforts de fibres 10, elle est ici assurée par un distributeur de liquide contrôlé 15, visible sur la figure 2. Un tel distributeur 15 comporte un canal d'amenée 16 de l'ensemble formé du mélange 12 de composants chimiques et au moins de l'agent gonflant depuis le réservoir formant mélangeur à réactifs, non représenté sur les figures annexées, dans lequel d'une part sont mélangés tous les composants chimiques et l'agent gonflant et d'autre part est opérée notamment la nucléation, voire le chauffage, d'un tel mélange. Cet ensemble liquide formé du mélange 12 de composants chimiques et de l'agent gonflant est ensuite réparti, sous pression, dans deux canaux 17 s'étendant transversalement pour aboutir respectivement à deux plaques de distribution 18 identiques, s'étendant suivant la largeur L (chacune présentant une longueur sensiblement égale à L/2), comportant une pluralité de buses 19 pour l'écoulement dudit mélange 12 sur les renforts de fibres 10. Ces buses d'écoulement 19 consistent en des orifices de section calibrée présentant une longueur déterminée. La longueur de ces buses d'écoulement 19 est ainsi déterminée de telle sorte que le liquide sorte avec un débit égal entre toutes les buses 19 afin que l'imprégnation des renforts de fibres 10 s'effectue au même moment, ou simultanément, sur la section de largeur L des renforts de fibres 10, et que la masse surfacique de liquide déposée au droit de chaque buse soit égale. Ce faisant, si l'on considère une section de largeur L des fibres 10, ces dernières sont imprégnées concurremment de sorte que l'imprégnation des couches de fibres 10 par le mélange 12 se réalise, en tous points de cette section, de façon identique, ce qui contribue à obtenir en sortie du laminateur double bande un bloc de mousse fibrée parfaitement homogène.

Le distributeur de liquide contrôlé 15 représenté sur cette figure 2 est un exemple de réalisation dans lequel deux plaques de distribution 18 identiques sont utilisées mais on pourra envisager une conception différente, dans la mesure où la fonction de distribution de liquide simultanée sur la section en largeur des fibres 10 est atteinte. Bien entendu, la caractéristique technique principale utilisée ici réside dans les différentes longueurs des buses d'écoulement 19, plus ou moins longue en fonction du parcours, ou trajet, du mélange 12 liquide depuis le conduit d'amenée 16 du distributeur 15 jusqu'à la buse d'écoulement 19 considérée.

Un autre aspect d'importance pour réaliser une bonne imprégnation des renforts de fibres 10 réside dans le choix d'une viscosité spécifique du liquide (consistant en le mélange 12 de composants chimiques et de l'agent gonflant). Le domaine de viscosité choisi doit permettre une bonne pénétration du liquide dans les premières couches de fibres 10, pour atteindre les suivantes jusqu'à la dernière couche (la couche inférieure de fibres 10, soit celle située le plus bas dans l'empilement des renforts de fibres), de sorte que l'imprégnation des fibres 10 est réalisée dans le laps de temps donné par les composants chimiques correspondant sensiblement au temps de crème. Autrement dit, la viscosité est choisie, par exemple par chauffage, ajouts de plastifiants et/ou par une nucléation plus ou moins importante, de telle sorte que l'imprégnation de l'ensemble des fibres 10 par le mélange 12, sur une section de largeur L, est obtenue avant ou juste avant le temps de crème, c'est-à-dire avant ou juste avant le commencement de l'expansion de la mousse de PUR/PIR.

Ces deux paramètres, le choix d'une viscosité adaptée et la distribution simultanée du mélange 12 sur une section de largeur L assurée ici par un distributeur de liquide contrôlé 15, sont les principaux paramètres pour conserver, lors de l'expansion de la mousse de PUR/PIR une bonne homogénéité des fibres, avant l'entrée de la mousse de PUR/PIR dans le laminateur double bande. Néanmoins, la contrainte exercée par les parois du laminateur double bande est nécessaire à la bonne répartition finale des fibres 10 dans la mousse, contribuant en cela très significativement à la parfaite homogénéité de la mousse fibrée.

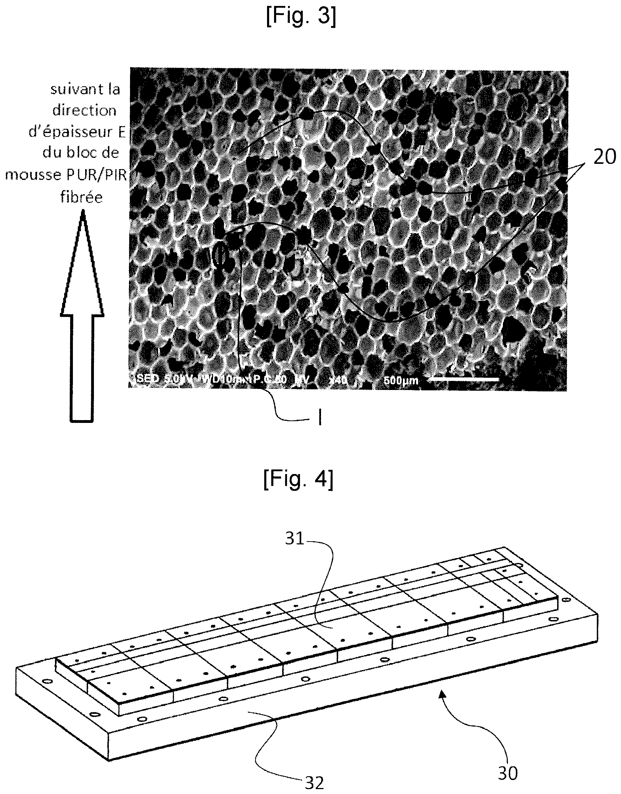

La figure 3 illustre un échantillon de mousse PUR/PIR obtenue selon l'invention. On note bien sur cette figure l'alignement de la longueur l des cellules 20 enfermant un gaz à faible conductivité thermique dans le sens de, ou parallèlement à, l'épaisseur E du bloc de mousse de PUR/PIR. Ainsi, comme cela est apparent sur cette figure, une très large majorité de ces cellules 20 présente une forme ovale, c'est-à-dire présentant une extension longitudinale l, cette extension s'effectuant parallèlement ou dans l'axe de l'épaisseur E du bloc de mousse fibrée en sortie du laminateur double bande. Outre l'homogénéité des fibres 10 dans le bloc, cette orientation massive des cellules 20 de la mousse joue un rôle crucial dans l'obtention des excellentes propriétés mécaniques qui sont présentées succinctement dans la suite.

La préparation pour l'obtention d'une mousse de PUR/PIR fibrée selon l'invention se caractérise par un rapport de contrainte de l'expansion de cette mousse fibrée vis-à-vis de cette même mousse expansée sans contrainte, autrement dit le volume de la mousse fibrée contrainte selon l'invention est compris entre 92% et 99%, de préférence entre 95% et 99%, du volume de cette même mousse sans contrainte (expansion libre). Or, pour obtenir industriellement, en continu, un tel bloc de mousse, on paramètre l'écartement des faces en vis-à-vis formant le tunnel du laminateur double bande, en fonction d'un débit de mélange de composants chimiques et d'agent gonflant par mètre linéaire de bande convoyeuse, plus précisément les faces inférieure et supérieure du tunnel/laminateur de telle manière que la contrainte à l'expansion de la mousse s'établisse dans le susdit domaine large de l'invention, voire dans le susdit domaine préféré.

Pour cela, on peut exploiter une loi d'évolution du volume d'expansion ayant été préablement déterminée par des mesures expérimentales ou une simultation numérique en fonction du débit de mélange de composants chimiques et d'agent gonflant par mètre linéaire de bande convoyeuse. Ce débit par mètre peut lui-même être calculé comme le rapport d'un débit de distribution du mélange par une vitesse linéaire de la bande convoyeuse. La loi d'évolution du volume d'expansion de la mousse peut donc être déterminée par différents protocoles expérimentaux en faisant varier un ou plusieurs paramètres opératoires, par exemple choisis parmi le débit de distribution du mélange et la vitesse linéaire de la bande convoyeuse.

La figure 6 représente ainsi une loi d'évolution c obtenue par un protocole expérimental consistant à fixer le débit de distribution du mélange et à faire varier la vitesse linéaire v de la bande convoyeuse, indiquée en abscisse. En ordonnée on a noté l'épaisseur e de la couche de mousse ainsi obtenue en sortie du laminateur, et qui ne peut bien sûr pas dépasser la hauteur E du laminateur lui-même.

A partir de plusieurs mesures expérimentales représentées par des points M, on déduit une loi d'évolution linéaire ou polynomiale, par exemple par interpolation linéraire ou quadratique, représentée par la courbe c. La courbe c peut être déterminée ou extrapolée sur toute plage de valeur souhaitée de la vitesse v ou de l'épaisseur e. Pour réaliser l'invention en ayant fixé la hauteur E du laminateur, c'est-à-dire l'épaisseur du bloc de mousse, la figure 6 montre qu'on peut fixer la vitesse de convoyage à une valeur v0 qui correspond, via la loi d'évolution représentée par la courbe c et au point ℓ sur cette courbe, à une hauteur d'expansion E0 supérieure à E et telle que E/E0 est compris entre 92% et 99%.

Cette loi d'évolution peut également être déterminée par un autre protocole expérimental en fonction du débit de mélange de composants chimiques avec une vitesse de convoyage constante.

Toujours est-il que, dans le cadre d'une production continue d'une telle mousse, le débit de composants et au moins d'agent gonflant est susceptible de varier et il faut pouvoir adapter la contrainte du laminateur à double bande à cette variation de débit. Il est ainsi proposé ici d'installer au moins un capteur de pression, de préférence une pluralité de tels capteurs de pression le long du laminateur, ces capteurs étant aptes à mesurer la pression exercée par la mousse entre la face inférieure et supérieure du laminateur. Ainsi, en paramétrant un domaine de pression correspondant à l'obtention d'une contrainte d'expansion de la mousse selon le domaine large ou le domaine préféré de l'invention, on adapte automatiquement, en fonction de la pression mesurée avec ce(s) capteur(s), le débit de composants chimiques et d'agent gonflant de manière à obtenir, dans un processus en continu, un bloc de mousse fibrée conforme à l'invention.

La solution proposée ici consiste à faire varier le débit de composants chimiques et/ou d'agent gonflant en fonction de la pression mesurée mais on pourrait également envisager de faire varier l'écartement entre les faces supérieure et inférieure du tunnel/laminateur, en fonction du débit de composants chimiques et d'agent gonflant mesuré ou calculé par mètre linéaire de la bande convoyeuse. Dans les deux cas, l'objectif est d'obtenir une mousse fibrée dans le domaine de contrainte souhaitée, pour la fabrication d'un bloc répondant aux attentes spécifiques, en particulier en résistance à la compression.

En effet, le bloc de mousse fibrée est destiné à être utilisé dans un environnement très particulier, et doit donc garantir des propriétés mécaniques et thermiques spécifiques. Le bloc de mousse fibrée obtenu par la préparation selon la présente invention fait ainsi partie d'un massif d'isolation thermique 30, soit dans l'exemple utilisé sur la figure 4, dans un panneau supérieur ou primaire 31 et/ou un panneau inférieur ou secondaire 32 d'un tel massif d'isolation 30 d'une cuve 71 destinée à recevoir un liquide extrêmement froid, tels qu'un GNL ou un GPL. Une telle cuve 71 peut équiper par exemple un réservoir au sol, une barge flottante ou analogue (tels qu'un FSRU « Floating Storage Regasification Unit » ou un FLNG « Floating Liquefied Natural Gas ») ou encore un navire, tel qu'un méthanier, transportant ce liquide énergétique entre deux ports.

En référence à la figure 5, une vue écorchée d'un navire méthanier 70 montre une cuve étanche et isolante 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 5 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en oeuvre des pompes embarquées dans le navire 70 et/ou des pompes équipant l'installation à terre 77 et/ou des pompes équipant le poste de chargement et de déchargement 75.

Dans la suite, une partie des expérimentations et tests réalisés par la demanderesse sont présentés pour permettre d'apprécier l'objet de l'invention et son étendue.

Les trois compositions de mousse présentées dans la suite ne comportent pas de renforts de fibres mais la demanderesse a mis en évidence que les résultats présentés ci-dessous avec ces compositions de mousse montrent un comportement similaire lorsqu'on ajoute un même renfort de fibres, en quantité équivalente pour chaque échantillon de composition. Chaque compositon est décrite par une liste d'ingrédients et les quantités abolues utlisées dans la préparation d'un échantillon (en unité arbitraire de masse u.a.). Ces trois compositions, la première de PUR, les secondes (2a et 2b) de PIR et la troisième d'un mélange PUR/PIR sont soumises à différents niveaux de contrainte en expansion, depuis une forte contrainte jusqu'à une expansion sans contrainte.

La composition n°1 consiste en une composition de mousse PUR et se compose comme suit :

**[Tableau 1]**

| Type de produit | Masse (u.a.) | Description | Référence commerciale du produit |
|---|---|---|---|
| Polyol 1 (à base de glycérol et de sorbitol) | 60-75 | 385-415 mg KOH/g | mélange de polyols à base de glycérol et de sorbitol de type Daltolac^{®} R200, R251, R404, R470, R500 |
| Polyol 2 (diol polyester aromatique) | 25-40 | 230-250 mg KOH/g | polyol polyester aromatique de type Stepanpol^{®} PS-1752, PS- 2352, PS-31 52 |
| isocyanate | 95-105 | 30-31,5% NCO | isocyanate polymérique de MDI de type Suprasec^{®} S5005 |
| Eau (agent gonflant chimique) | 0,05-1,5 | | |
| Agent gonflant physique | 3-12 | 365mfc / 227ea ou 245fa | |
| surfactant silicone | 0,5-1,5 | silicone greffé P PEO/PPO | Tegostab^{®} E38404 ou B8465 |
| catalyseur de réaction à base d'étain | 0,05-0,08 | DBTL | Dabco^{®} T12N |

La composition n°2a consiste en une composition de mousse PIR et se compose comme suit :

**[Tableau 2]**

| Type de produit | Masse (u.a.) | Description | Référence commerciale du produit |
|---|---|---|---|
| mélange de polyols + eau + surfactant + retardants de flamme + catalyseur | 100 | 234 mg KOH/g | Voracor^{®} CN815 |
| isocyanate | 200-230 | 30-31,5% NCO | Isocyanate polymérique de MDI de type Voranate^{®} M220 ou M229 |
| Eau (agent gonflant chimique) | 2-4 | | |
| agent gonflant physique | 3-12 | 245fa | |
| surfactant silicone | 1-3 | silicone greffé PEO/PPO | Dow DC 193 |
| catalyseurs | 0,5-3 | DMBA/DMCHA | Voracor^{®} CN626 |

La composition n°2b consiste en une autre composition de mousse PIR et se compose comme suit :

**[Tableau 3]**

| Type de produit | Masse (u.a.) | Description | Référence commerciale du produit |
|---|---|---|---|
| Polyol 1 | 64 | 190-230 mg KOH/g | polyol polyester aromatique |
| Polyol 2 | 21 | 295-335 mg KOII/g | polyol polyester aromatique |
| Retardateur de flamme | 10-20 | | triéthylphosphate |
| isocyanate | 220 | 30-31,5% NCO | isocyanate polymérique de MDI de type Voranate^{®} M220 ou M229 |
| Eau (agent gonflant chimique) diluée dans un polyol polyether | 0,5-1,5 | 50% d'eau en dilution dans un polyol | Voracor^{®} CM265 |
| agent gonflant physique | 2-5 | 245 fa | |
| surfactant silicone | 1-5 | silicone greffé PF.O/PPO | Dow DC 193 |
| catalyseurs | 1-3 | DMBA/DMCH A | Voracor^{®} CN626 |

La composition n°3 consiste en une composition de mousse PUR/PIR (mélange PUR et PIR) et se compose comme suit :

**[Tableau 4]**

| Type de produit | Masse (u.a.) | Description | Référence commerciale du produit |
|---|---|---|---|
| Polyol | 100 | 330-390 mg KOH/g | mélange de polyols polyester aromatique et polyols polyéther |
| isocyanate | 110-155 | 30-31,5% NCO | isocyanate polymérique de MDI de type Voranate^{®} M220 ou M229 |
| Eau (agent gonflant chimique) diluée dans un polyol polyether | 0,4-1,5 | 50% d'eau en dilution dans un polyol | Voracor^{®} CM265 |
| agent gonflant physique | 4-12 | 245 fa | |
| surfactant silicone | 1-3 | silicone greffé PEO/PPO | Dow DC 193 |
| catalyseurs | 2-4 | DMBA | |
| | 0,5-2 | | Voracor^{®} CM420 |
| | 0,5-1 | Carboxylate d'ammonium | |

A nouveau, dans la suite, seule une partie des résultats expérimentaux sont présentés afin de faciliter la lecture. Toutefois, la demanderesse est en mesure de présenter, à la date de dépôt de la présente demande, les résultats complets lui ayant permis de définir l'invention, depuis sa définition la plus générale jusqu'à ses définitions les plus particulières.

La mousse PUR/PIR produite par expansion libre présente de bonnes qualités mécaniques dans l'épaisseur E mais les pertes, pour obtenir un bloc de mousse fibrée homogène de forme parallélépipédique, sont d'au moins 15% voire de plus de 20-25%, ce qui n'est pas industriellement acceptable. Ainsi, la valeur en compression pour une expansion libre de la composition considérée (n°1, n°2a, n°2b ou n°3) est prise en tant que valeur à 100, respectivement dans le cas PUR, PIR puis PUR/PIR, et les mesures pour chacune des compositions sont rapportées par rapport à cet étalonnage à 100, étant entendu que le pourcentage obtenu est fonction d'une part du résultat du test normé ISO 844 concernant la « limite d'élasticité » et de la « résistance à la compression » de l'échantillon testé.

Suite à la réalisation des essais, certains résultats sont présentés, de manière simplifiée, ci-dessous pour illustrer les découvertes de la demanderesse.

**[Tableau 5]**

| **Composition avec taux de compression 1 expansion libre** | % orientation des cellules suivant l'épaisseur E | Résultat de **résistance en compression,** réalisé sur des éprouvettes selon la norme ISO 844 / base 100% (expansion libre) |
|---|---|---|
| Compositions 1 et 3 | inférieure à 50 | 44 à 69 |
| comprimée à 67-68% (rapport volume final par rapport au volume « expansion libre ») | | |
| Compositions 1 & 3 | inférieure à 60 | 55 |
| comprimée à 86% | | |
| Compositions 1 & 3 | supérieure à 60 | 50 à 68 |
| comprimée à 90% | | |
| Compositions 1 & 3 | supérieure à 60 | 55 à 70 |
| comprimée à 91% | | |
| **Compositions 1 & 3** | **90** | **91** |
| comprimée à 95% | | |
| **Compositions 1 & 3** | **supérieure à 90** | **105** |
| comprimée à 97% | | |
| **Compositions 1 & 3** | **supérieure à 90** | **103** |
| comprimée à 99% | | |
| Compositions 1 & 3 | supérieure à 90 | 100 |
| expansion libre (densité : environ 130 kg.m⁻³) | | soit 1,25 MPa |
| Compositions 2 (2a et 2b ci-dessus) | inférieure à 60 | 58 |
| comprimée à 85% | | |
| Compositions 2 | supérieure à 60 | 69 |
| comprimée à 91% | | |
| **Compositions 2** | **supérieure à 60** | **92** |
| comprimée à 92% | | |
| **Compositions 2** | **supérieure à 90** | **98** |
| comprimée à 96% | | |
| **Compositions 2** | **supérieure à 90** | **104** |
| comprimée à 97% | | |
| **Compositions 2** | **supérieure à 90** | **102** |
| comprimée à 99% | | |
| Compositions 2 | supérieure à 90 | 100 |
| expansion libre (densité : environ 130 kg.m⁻³) | | soit 1,25 MPa |

Comme on le voit avec les résultats présentés dans le tableau ci-dessus, seul le domaine de contrainte selon l'invention (noté en gras) permet d'obtenir ou de conserver de bonnes propriétés mécaniques dans l'épaisseur E, tout en proposant une production économique puisque les pertes matières s'établissent à moins de 5%, voire moins de 2%.

Par ailleurs, il faut noter que les mousses PUR/PIR fibrées selon l'invention ne présentent aucune dégradation significative de leur propriété relative à la (très faible) conductivité thermique. Ainsi, à titre d'exemple, lorsque la contrainte à l'expansion est comprise entre 92% et 99% par rapport à l'expansion libre (rapport de volumes) pour les trois compositions susvisées n°1, n°2 (a et b) et n°3, on obtient les valeurs suivantes de conductivité thermique :

**[Tableau 6]**

| conductivité thermique (mW/m.K) | | |
|---|---|---|
| à -170°C | à -120°C | à +20°C |
| 13-16 | 15-18 | 23-27 |

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention telle que définie dans les revendications 1-21.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de préparation d'un bloc de mousse de polyuréthane et/ou polyisocyanurate fibrée convenant à un massif d'isolation thermique (30) d'une cuve étanche et thermiquement isolante, le bloc de mousse de polyuréthane et/ou polyisocyanurate fibrée étant composé de cellules fermées (20) emmagasinant un gaz et se présentant sous la forme d'un parallélépipède d'une épaisseur E et d'une largeur L, le procédé de préparation comportant les étapes suivantes :
a) une étape de mélange (12) de composants chimiques nécessaires à l'obtention d'une mousse de polyuréthane et/ou polyisocyanurate, lesdits composants comportant des réactifs pour l'obtention de polyuréthane et/ou polyisocyanurate, au moins un agent gonflant consistant en un agent d'expansion physique et/ou chimique, et éventuellement au moins un catalyseur de réaction et/ou un émulsifiant,
b) une étape d'imprégnation de fibres (10) par le susdit mélange (12) de composants chimiques via une distribution de liquide contrôlée sur la largeur L sur une bande de transport, les fibres (10) ayant été préablement déposées sur la bande de transport et représentant entre 1% et 60% en masse,
c) une étape de formation et d'expansion de la mousse de polyuréthane et/ou polyisocyanurate fibrée, ladite expansion de la mousse de polyuréthane et/ou polyisocyanurate fibrée étant physiquement contrainte par les parois d'un laminateur double bande formant un tunnel, de section rectangulaire avec une distance entre les parois disposées latéralement égale à L et une distance entre les parois disposées horizontalement égale à E, enfermant ainsi la mousse fibrée en expansion de manière à obtenir le susdit bloc de mousse de polyuréthane et/ou polyisocyanurate fibrée, dans lequel le positionnement des parois du tunnel du laminateur double bande est défini à partir d'une loi d'évolution du volume d'expansion de telle sorte que la contrainte à l'expansion de la mousse de polyuréthane et/ou polyisocyanurate fibrée conduit à un volume de mousse de polyuréthane et/ou polyisocyanurate fibrée, en sortie du laminateur à double bande, représentant entre 92% et 99% du volume d'expansion de cette même mousse de polyuréthane et/ou polyisocyanurate fibrée dans le cas d'une expansion libre, sans la contrainte des parois d'un tel laminateur à double bande.

2. Procédé selon la revendication 1, dans lequel le susdit volume de la mousse de polyuréthane et/ou polyisocyanurate fibrée représente entre 95% et 99% du volume d'expansion de cette même mousse fibrée dans le cas d'une expansion libre, sans la contrainte des parois d'un laminateur à double bande.

3. Procédé selon la revendication 1 ou 2, dans lequel, lors de l'étape d'imprégnation de mâts de fibres (10), le susdit mélange (12) de composants présente une viscosité comprise entre 30 mPa.s et 1500 mPa.s, de préférence entre 50 mPa.s et 700 mPa.s.

4. Procédé selon l'une quelconque des revendications précédentes, dans lequel au moins 60% des susdites cellules (20) emmagasinant un gaz présentent une forme allongée ou étirée suivant un axe parallèle à l'axe de l'épaisseur E du bloc de mousse de polyuréthane et/ou polyisocyanurate fibrée.

5. Procédé selon l'une quelconque des revendications précédentes, dans lequel au moins 80%, de préférence au moins 90%, des susdites cellules (20) emmagasinant un gaz présentent une forme allongée ou étirée suivant un axe parallèle à l'axe de l'épaisseur E du bloc de mousse de polyuréthane et/ou polyisocyanurate fibrée.

6. Procédé selon l'une quelconque des revendications précédentes, dans lequel les fibres (10) consistent en de la fibre de verre ou en des fibres de carbone, de préférence des fibres de verre.

7. Procédé selon l'une des revendications 1 à 6, dans lequel les fibres (10) se présentent sous forme d'une pluralité de couches de renforts tissées ou non tissées s'étendant suivant un plan d'orientation perpendiculaire à l'épaisseur E.

8. Procédé selon l'une quelconque des revendications précédentes, dans lequel les fibres (10) sont disposées sur toute la largeur L et l'étape b) d'imprégnation des fibres (10) par le mélange (12) de composants, pour obtenir une mousse de polyuréthane et/ou polyisocyanurate fibrée, et de l'agent gonflant s'opère, via un distributeur de liquide contrôlé (15), simultanément sur toute la largeur L.

9. Procédé selon l'une quelconque des revendications précédentes, dans lequel l'agent gonflant consiste en une combinaison d'un agent d'expansion physique et d'un agent d'expansion chimique.

10. Procédé selon l'une quelconque des revendications précédentes, dans lequel l'agent d'expansion physique est choisi parmi les alcanes et les cycloalcanes ayant au moins 4 atomes de carbone, les éthers dialkyls, les esters, les cétones, les acétals, les fluoroalcanes, les fluoro-oléfines ayant entre 1 et 8 atomes de carbone et les tétraalkylsilanes ayant entre 1 et 3 atomes de carbone dans la chaine alkyle, en particulier le tétraméthylsilane, ou un mélange de ceux-ci.

11. Procédé selon l'une quelconque des revendications précédentes, dans lequel l'agent d'expansion chimique consiste en de l'eau.

12. Procédé selon l'une quelconque des revendications précédentes, dans lequel les réactifs comportent :
- un composant isocyanate comportant un ou plusieurs composés isocyanates, lesdits composés isocyanates présentant une viscosité comprise entre 100 et 3000 mPa.s à température ambiante, et
- un composant polyol comportant un ou plusieurs composés polyols, lesdits composés polyols présentant une viscosité comprise entre 200 et 3000 mPa.s à température ambiante.

13. Procédé selon la revendication 12, dans lequel, lors de l'étape a) de mélange (12) de composants chimiques, du gaz de nucléation est incorporé à au moins un composé polyol, de préférence à l'aide d'un mélangeur statique/dynamique sous une pression entre 20 et 250 bars, le gaz de nucléation représentant entre 0 et 50% en volume de polyol, de préférence entre 0,05 et 20% en volume du volume de polyol.

14. Procédé selon l'une quelconque des revendications précédentes, dans lequel, lors de l'étape a) de mélange (12) des composants chimiques, la température de chacun des réactifs pour l'obtention de polyuréthane et/ou polyisocyanurate est comprise entre 10°C et 40°C, de préférence entre 15°C et 30°C.

15. Procédé selon l'une quelconque des revendications précédentes, dans lequel on ajoute en outre au mélange (12), à l'étape a), un retardateur de flamme organophosphoré, avantageusement le triéthylphosphate (TEP), le tris(2-chloroiso-propyl) phosphate (TCPP), du tris(1,3-dichloroisopropyl) phosphate (TDCP), du tris(2-chloroéthyl) phosphate ou du tris(2,3-dibromopropyl) phosphate, ou un mélange de ceux-ci, ou un retardateur de flamme inorganique, avantageusement du phosphore rouge, du graphite expansible, un hydrate d'oxyde d'aluminium, un trioxyde d'antimoine, un oxyde d'arsenic, un polyphosphate d'ammonium, un sulfate de calcium ou des dérivés d'acide cyanurique, un mélange de ceux-ci.

16. Procédé selon l'une quelconque des revendications précédentes, dans lequel les fibres (10) représentant entre 2% et 30% en masse du susdit mélange (12) de composants.

17. Système de préparation d'un bloc de mousse de polyuréthane et/ou polyisocyanurate fibrée d'un massif d'isolation thermique (30) convenant à une cuve étanche et thermiquement isolante, pour la mise en oeuvre du procédé selon l'une quelconque des revendications précédentes, comportant :
- un dispositif réactionnel recevant des composants chimiques nécessaires à l'obtention d'une mousse de polyuréthane et/ou polyisocyanurate, lesdits composants chimiques comportant des réactifs pour l'obtention de polyuréthane et/ou polyisocyanurate, au moins un agent gonflant consistant en un agent d'expansion physique et/ou chimique et éventuellement au moins un catalyseur de réaction et/ou un émulsifiant,
- un distributeur des susdits composants pour réaliser une distribution de liquide contrôlée sur des fibres (10) disposées sur une bande de transport, pour l'imprégnation de ces dernières par ces composants,
- la bande de transport pour réceptionner et transporter les susdits composants et les fibres (10) depuis l'imprégnation de ces fibres (10) par lesdits composants jusqu'à la formation du bloc de mousse de polyuréthane et/ou polyisocyanurate fibrée, le bloc de mousse de polyuréthane et/ou polyisocyanurate fibrée formé se présentant sous la forme d'un parallélépipède d'une épaisseur E et d'une largeur L,
- un laminateur double bande formant un tunnel, de section rectangulaire avec une distance entre les parois disposées latéralement égale à L et une distance entre les parois disposées horizontalement égale à E, enfermant ainsi la mousse fibrée en expansion de manière à obtenir le bloc de mousse de polyuréthane et/ou polyisocyanurate fibrée,
le système étant **caractérisé en ce que** le positionnement des parois du tunnel du laminateur double bande est défini à partir d'une loi d'évolution du volume d'expansion de telle sorte que la contrainte à l'expansion de la mousse de polyuréthane et/ou polyisocyanurate fibrée conduit à un volume de mousse de polyuréthane et/ou polyisocyanurate fibrée, en sortie du laminateur à double bande, représentant entre 92% et 99%, de préférence entre 95% et 99%, du volume d'expansion de cette même mousse de polyuréthane et/ou polyisocyanurate fibrée dans le cas d'une expansion libre, sans la contrainte des parois d'un laminateur à double bande.

18. Bloc de mousse de polyuréthane et/ou polyisocyanurate fibrée d'un massif d'isolation thermique (30) convenant à une cuve étanche et thermiquement isolante, directement obtenu grâce au procédé selon l'une quelconque des revendications 1 à 16 sans arasage ultérieur, le bloc de mousse de polyuréthane et/ou polyisocyanurate fibrée contenant entre 1% et 60% en masse de fibres (10), de préférence entre 2% et 30%, réparties de manière homogène dans ledit bloc, présentant une largeur L d'au moins dix centimètres, avantageusement comprise entre 10 et 500 centimètres, et une épaisseur E d'au moins dix centimètres, avantageusement comprise entre 10 et 100 centimètres, le bloc de mousse de polyuréthane et/ou polyisocyanurate fibrée étant composé de cellules fermées (20) emmagasinant un gaz,
dont le volume représente entre 92% et 99%, de préférence entre 95% et 99%, du volume d'expansion de cette même mousse de polyuréthane et/ou polyisocyanurate fibrée dans le cas d'une expansion libre, sans la contrainte des parois d'un laminateur double bande formant un tunnel de section rectangulaire, et en ce qu'au moins 60%, de préférence au moins 80% et de manière encore préférée au moins 90%, des susdites cellules (20) emmagasinant un gaz présentent une forme allongée ou étirée suivant un axe parallèle à l'axe de l'épaisseur E du bloc de mousse de polyuréthane et/ou polyisocyanurate fibrée.

19. Bloc de mousse de polyuréthane et/ou polyisocyanurate fibrée selon la revendication précédente, dans lequel la masse volumique dudit bloc est comprise entre 50 et 300 kg/m³, de préférence comprise entre 70 et 170 kg/m³.

20. Cuve étanche et thermiquement isolante intégrée dans une structure porteuse, comportant une cuve étanche et thermiquement isolante comprenant au moins une membrane métallique étanche composée d'une pluralité de virures (1, 2) métalliques ou plaques métalliques pouvant comporter des ondulations et un massif thermiquement isolant (30) comportant au moins une barrière thermiquement isolante (5) adjacente à ladite membrane,
**caractérisée en ce que** le massif thermiquement isolant comporte le bloc de mousse de polyuréthane et/ou polyisocyanurate fibrée selon la revendication 18 ou 19.

21. Navire (70) pour le transport d'un produit liquide froid, le navire comportant une double coque (72) et une cuve étanche et thermiquement isolante (71) selon la revendication 20 disposée dans la double coque.

## Patentansprüche

1. Verfahren zur Herstellung eines Blocks aus faserigem Polyurethan- und/oder Polyisocyanuratschaum, der für einen Wärmeisolationsblock (30) eines dichten und wärmeisolierenden Gefäßes geeignet ist, wobei der Block aus faserigem Polyurethan- und/oder Polyisocyanuratschaum aus geschlossenen Zellen (20) besteht, die ein Gas speichern und sich in der Form eines Parallelepipeds mit einer Dicke E und einer Breite L präsentieren, wobei der Herstellungsprozess die folgenden Schritte umfasst:
a) einen Schritt des Mischens (12) chemischer Komponenten, die zur Herstellung eines Polyurethan- und/oder Polyisocyanuratschaums erforderlich sind, wobei die Komponenten Reaktanten zur Herstellung von Polyurethan und/oder Polyisocyanurat, mindestens ein Treibmittel, bestehend aus einem physikalischen und/oder chemischen Quellmittel, und optional mindestens ein Reaktionskatalysator und/oder ein Emulgator, umfassen,
b) einen Schritt des Imprägnierens von Fasern (10) mit der oben genannten Mischung (12) chemischer Komponenten mittels einer gesteuerte Flüssigkeitsverteilung über die Breite L auf einem Förderband, wobei die Fasern (10) zuvor auf dem Transportband abgelegt wurden und zwischen 1 und 60 Masse-% darstellen,
c) einen Schritt des Formens und Expandierens des faserigen Polyurethan- und/oder Polyisocyanuratschaums, wobei die Expansion des faserigen Polyurethan- und/oder Polyisocyanuratschaums physikalisch durch die Wände eines Doppelbandlaminators eingeschränkt wird, der einen Tunnel mit rechteckigem Querschnitt mit einem Abstand zwischen den seitlich angeordneten Wänden gleich L und einem Abstand zwischen den horizontal angeordneten Wänden gleich E, bildet, wodurch der expandierende Faserschaum eingeschlossen wird, um den oben genannten Block aus faserigem Polyurethan- und/oder Polyisocyanuratschaum zu erhalten, wobei die Anordnung der Wände des Tunnels des Doppelbandlaminators anhand eines Entwicklungsgesetzes des Expansionsvolumens definiert wird, so dass die Eindämmung der Expansion des fasrigen Polyurethan- und/oder Polyisocyanuratschaums zu einem Volumen aus fasrigen Polyurethan- und/ oder Polyisocyanuratschaum am Ausgang des Doppelbandlaminators führt, das zwischen 92 % und 99 % des Expansionsvolumens dieses fasrigen Polyurethan- und/oder Polyisocyanuratschaums bei freier Expansion ohne die Beschränkung durch die Wände eines solchen Doppelbandslaminators ausmacht.

2. Verfahren gemäß Anspruch 1, wobei das oben genannte Volumen des faserigen Polyurethan- und/oder Polyisocyanuratschaums zwischen 95 % und 99 % des Expansionsvolumens dieses gleichen faserigen Schaums im Falle einer freien Expansion ohne die Beschränkung der Wände eines Doppelbandlaminators darstellt.

3. Verfahren gemäß Anspruch 1 oder 2, wobei beim Schritt des Imprägnierens von Fasermatten (10) die vorgenannte Mischung (12) der Komponenten eine Viskosität zwischen 30 mPa.s und 1500 mPa.s, vorzugsweise zwischen 50 mPa.s und 700 mPa.s., aufweist.

4. Verfahren gemäß einem der vorstehenden Ansprüche, wobei mindestens 60 % der oben genannten Zellen (20), die ein Gas speichern, eine längliche oder gestreckte Form entlang einer Achse, die parallel zur Achse der Dicke E des Blocks aus faserigem Polyurethan- und/oder Polyisocyanuratschaum verläuft, aufweisen.

5. Verfahren gemäß einem der vorhergehenden Ansprüche, wobei mindestens 80 %, vorzugsweise mindestens 90 %, der oben genannten Zellen (20), die ein Gas speichern, eine längliche oder gestreckte Form entlang einer zur Achse, die parallel zur Achse der Dicke E des Blocks aus faserigem Polyurethan- und/ oder Polyisocyanuratschaum verläuft, aufweisen.

6. Verfahren gemäß einem der vorhergehenden Ansprüche, wobei die Fasern (10) aus Glasfasern oder Kohlenstofffasern, vorzugsweise Glasfasern, bestehen.

7. Verfahren gemäß einem der Ansprüche 1 bis 6, wobei die Fasern (10) in Form einer Vielzahl von gewebten oder nicht gewebten Verstärkungsschichten, die sich entlang einer Orientierungsebene senkrecht zur Dicke E erstrecken, bestehen.

8. Verfahren gemäß einem der vorstehenden Ansprüche, wobei die Fasern (10) über die gesamte Breite L angeordnet werden und Schritt b) des Imprägnierens der Fasern (10) mit der Mischung (12) der Komponenten und des Treibmittels zum Erhalt eines faserigen Polyurethan- und/oder Polyisocyanuratschaums, sich gleichzeitig über einen gesteuerten Flüssigkeitsverteiler (15) über die gesamte Breite L vollziehen.

9. Verfahren gemäß einem der vorhergehenden Ansprüche, wobei das Treibmittel aus einer Kombination aus einem physikalischen Treibmittel und einem chemischen Quellmittel besteht.

10. Verfahren gemäß einem der vorstehenden Ansprüche, wobei das physikalische Quellmittel aus Alkanen und Cycloalkanen mit mindestens 4 Kohlenstoffatomen, Dialkylethern, Estern, Ketonen, Acetalen, Fluoralkanen, Fluorolefinen mit zwischen 1 und 8 Kohlenstoffatomen und Tetraalkylsilane mit zwischen 1 und 3 Kohlenstoffatomen in der Alkylkette, insbesondere Tetramethylsilan, oder eine Mischung davon, ausgewählt ist.

11. Verfahren gemäß einem der vorhergehenden Ansprüche, wobei das chemische Quellmittel Wasser ist.

12. Verfahren gemäß einem der vorhergehenden Ansprüche, wobei die Reaktanten umfassen:
- eine Isocyanatkomponente, die eine oder mehrere Isocyanatkomponenten umfasst, wobei die Isocyanatkomponenten bei Umgebungstemperatur eine Viskosität zwischen 100 und 3000 mPa.s aufweisen, und
- eine Polyolkomponente, die eine oder mehrere Polyolkomponenten umfasst, wobei die Polyolkomponenten bei Umgebungstemperatur eine Viskosität zwischen 200 und 3000 mPa.s aufweisen.

13. Verfahren gemäß Anspruch 12, wobei während Schritt a) des Mischens (12) chemischer Komponenten Nukleierungsgas in mindestens eine Polyolkomponente eingearbeitet wird, vorzugsweise mit Hilfe eines statischen/dynamischen Mischers unter einem Druck zwischen 20 und 250 bar, wobei das Nukleierungsgas zwischen 0 und 50 Volumen-% Polyol, vorzugsweise zwischen 0,05 und 20 Volumen-% Polyol, des Polyol Volumen ausmacht.

14. Verfahren gemäß einem der vorstehenden Ansprüche, wobei während Schritt a) des Mischens (12) der chemischen Komponenten die Temperatur jedes der Reaktanten zur Gewinnung des Polyurethans und/oder Polyisocyanurats zwischen 10 °C und 40 °C liegt °C, vorzugsweise zwischen 15°C und 30°C.

15. Verfahren gemäß einem der vorhergehenden Ansprüche, wobei man der Mischung (12) in Schritt a) weiterhin ein phosphororganische Flammschutzmittel, vorzugsweise Triethylphosphat (TEP), Tris(2-chlorisopropyl)phosphat (TCPP), Tris(1,3-dichlorisopropyl)phosphat ( TDCP), Tris(2-chlorethyl)phosphat oder Tris(2,3-dibrompropyl)phosphat oder eine Mischung davon, oder ein anorganisches Flammschutzmittel, vorzugsewise roter Phosphor, Blähgraphit, Aluminiumoxidhydrat, Antimontrioxid, Arsenoxid , Ammoniumpolyphosphat, Calciumsulfat oder Cyanursäurederivate, eine Mischung davon, hinzufügt.

16. Verfahren gemäß einem der vorstehenden Ansprüche, wobei die Fasern (10) zwischen 2 und 30 Gewicht-% der Mischung (12) der Komponenten ausmachen.

17. System zur Herstellung eines Blocks aus fasrigem Polyurethan- und/ oder Polyisocyanuratschaum, eines Wärmeisolationsblock (30), der für ein dichtes und wärmeisolierendes Gefäß geeignet ist, zur Durchführung des Verfahrens gemäß einem der vorstehenden Ansprüche, umfassend:
- eine Reaktionsvorrichtung zur Aufnahme chemischer Komponenten, die zur Herstellung eines Polyurethan- und/oder Polyisocyanuratschaums erforderlich sind, wobei die Komponenten Reaktanten zur Herstellung von Polyurethan und/oder Polyisocyanurat, mindestens ein Treibmittel, bestehend aus einem physikalischen und/oder chemischen Quellmittel, und optional mindestens ein Reaktionskatalysator und/oder ein Emulgator, umfassen
- einen Verteiler der oben genannten Komponenten, um eine kontrollierte Flüssigkeitsverteilung auf Fasern (10), die einem Förderband angeordneten sind, zu erreichen, um diese mit den Komponenten zu imprägnieren,
- das Förderband zum Aufnehmen und Transportieren der oben genannten Komponenten und Fasern (10) von der Imprägnierung dieser Fasern (10) durch die genannten Komponenten bis zur Bildung des faserigen Polyurethan- und/oder Polyisocyanuratschaumblocks, wobei der geformte Schaumblock aus faserigem Polyurethan und/oder Polyisocyanurat die Form eines Parallelepipeds mit einer Dicke E und einer Breite L, aufweist
- ein Doppelbandlaminator der einen Tunnel mit rechteckigem Querschnitt mit einem Abstand zwischen den seitlich angeordneten Wänden gleich L und einem Abstand zwischen den horizontal angeordneten Wänden gleich E, bildet, und so den expandierenden Faserschaum umschließt, um den Block aus faserigem Polyurethan und/oder Polyisocyanuratschaum zu bilden,
das System ist **gekennzeichnet dadurch, dass** die Anordnung der Wände des Tunnels des Doppelbandlaminators anhand eines Entwicklungsgesetzes des Expansionsvolumens definiert wird, so dass die Eindämmung der Expansion des fasrigen Polyurethan- und/oder Polyisocyanuratschaums zu einem Volumen des fasrigen Polyurethan- und/ oder Polyisocyanuratschaums am Ausgang des Doppelbandlaminators führt, das zwischen 92 % und 99 %, vorzugsweise zwischen 95% und 99%, des Expansionsvolumens des faserigen Polyurethan und/oder Polyisocyanuratschaums bei freier Expansion ohne die Beschränkung durch die Wände eines solchen Doppelbandlaminators ausmacht.

18. Block aus fasrigem Polyurethan- und/oder Polyisocyanuratschaum, der für einen Wärmeiolationsblock (30) eines dichten und wärmeisolierenden Gefäßes geeignet ist, direkt erhalten durch das Verfahren gemäß einem der Ansprüche 1 bis 16 ohne nachträgliches Abschleifen, wobei der Block aus faserigem Polyurethan und/oder Polyisocyanuratschaum zwischen 1 und 60 Masse-% Fasern (10), vorzugsweise zwischen 2 und 30 %, enthält, die homogen im Block verteilt sind und eine Breite L von mindestens zehn Zentimetern, vorzugsweise zwischen 10 und 500 Zentimetern, und eine Dicke E von mindestens zehn Zentimetern, vorzugsweise zwischen 10 und 100 Zentimetern, aufweist, wobei der Block aus faserigem Polyurethan und/oder Polyisocyanuratschaum aus geschlossenen Zellen (20) besteht, die ein Gas speichern, dessen Volumen zwischen 92 % und 99 %, vorzugsweise zwischen 95 % und 99 %, des Expansionsvolumens des fasrigen Polyurethan- und/oder Polyisocyanatschaums im Falle einer freien Expansion ohne die Beschränkung durch die Wände eines Doppelbandlaminators, die einen Tunnel mit rechteckigem Querschnitt bilden, ausmacht, und wobei mindestens 60 %, vorzugsweise mindestens 80 % und noch bevorzugter mindestens 90 % der Zellen (20), die ein Gas speichern, eine längliche oder gestreckte Form entlang einer Achse, die parallel zur Achse der Dicke E des Blocks aus faserigem Polyurethan- und/oder Polyisocyanuratschaum verläuft, aufweisen.

19. Block aus fasrigem Polyurethan- und/oder Polyisocyanuratschaum gemäß dem vorstehenden Anspruch, wobei die Massendichte des Blocks zwischen 50 und 300 kg/m3, vorzugsweise zwischen 70 und 170 kg/m3, liegt.

20. Dichtes und wärmeisolierendes Gefäß, integriert in eine Tragstruktur, umfassend einen dichtes und wärmeisolierendes Gefäß, das mindestens eine dichte Metallmembran umfasst, die aus einer Vielzahl von Metallstreifen (1, 2) oder Metallplatten besteht, die Wellen aufweisen können, und einen Wärmeisolationsblock (30), der mindestens eine wärmeisolierende Sperre (5), welche an die Membran angrenzt, umfasst,
**dadurch gekennzeichnet, dass** der Wärmeisolationsblock den Block aus faserigem Polyurethan- und/oder Polyisocyanuratschaum gemäß Anspruch 18 oder 19 umfasst.

21. Schiff (70) zum Transport eines kalten flüssigen Produkts, wobei das Schiff eine Doppelhülle (72) und einen in der Doppelhülle angeordnetes dichtes und wärmeisolierendes Gefäß (71) gemäß Anspruch 20 umfasst.

## Claims

1. A process for preparing a block of fiberized polyurethane/polyisocyanurate foam that is suitable for a heat-insulating slab (30) of a leaktight and heat-insulating tank, the block of fiberized polyurethane/polyisocyanurate foam being composed of closed cells (20) stockpiling a gas and being in the form of a parallelepiped with a thickness E and a width L, the preparation process including the following steps:
a) a step of mixing (12) chemical components required for obtaining a polyurethane/polyisocyanurate foam, said components including reagents for obtaining polyurethane/polyisocyanurate, at least one swelling agent consisting of a physical and/or chemical expansion agent and optionally at least one reaction catalyst and/or one emulsifier,
b) a step of impregnating fibers (10) with the abovementioned mixture (12) of chemical components via a controlled distribution of liquid over the width L on a conveyor belt, the fibers (10) having been placed beforehand on the conveyor belt and representing between 1% and 60% by mass,
c) a step of forming and expanding the fiberized polyurethane/polyisocyanurate foam, said expansion of the fiberized polyurethane/polyisocyanurate foam being physically constrained by the walls of a double-belt laminator forming a tunnel, of rectangular cross section with a distance between the walls arranged laterally equal to L and a distance between the walls arranged horizontally equal to E, thus enclosing the fiberized foam undergoing expansion so as to obtain the abovementioned block of fiberized polyurethane/polyisocyanurate foam,
in which the positioning of the walls of the tunnel of the double-belt laminator is defined from a law of evolution of the expansion volume, so that the expansion constraint on the fiberized polyurethane/polyisocyanurate foam leads to a volume of fiberized polyurethane/polyisocyanurate foam, exiting the double-belt laminator, representing between 92% and 99% of the expansion volume of this same fiberized polyurethane/polyisocyanurate foam in the case of free expansion, without the constraint of the walls of such a double-belt laminator.

2. The process as claimed in claim 1, in which the abovementioned volume of the fiberized polyurethane/polyisocyanurate foam represents between 95% and 99% of the expansion volume of this same fiberized foam in the case of free expansion, without the constraint of the walls of a double-belt laminator.

3. The process as claimed in claim 1 or 2, in which, during the step of impregnation of fiber laps (10), the abovementioned mixture (12) of components has a viscosity of between 30 mPa.s and 1500 mPa.s, preferably between 50 mPa.s and 700 mPa.s.

4. The process as claimed in any one of the preceding claims, in which at least 60% of the abovementioned cells (20) stockpiling a gas have a form that is elongated or stretched along an axis parallel to the axis of the thickness E of the block of fiberized polyurethane/polyisocyanurate foam.

5. The process as claimed in any one of the preceding claims, in which at least 80%, preferably at least 90% of said cells (20) stockpiling a gas have a form that is elongated or stretched along an axis parallel to the axis of the thickness E of the block of fiberized polyurethane/polyisocyanurate foam.

6. The process as claimed in any one of the preceding claims, in which the fibers (10) consist of glass fiber or carbon fibers, preferably glass fibers.

7. The process as claimed in one of claims 1 to 6, in which the fibers (10) are in the form of a plurality of woven or nonwoven reinforcing layers extending along an orientation plane perpendicular to the thickness E.

8. The process as claimed in any one of the preceding claims, in which the fibers (10) are arranged along the entire width L and step b) of impregnating the fibers (10) with the mixture (12) of components, to obtain a fiberized polyurethane/polyisocyanurate foam and of the swelling agent, is performed by means of a controlled liquid distributor (15), simultaneously over the entire width L.

9. The process as claimed in any one of the preceding claims, in which the swelling agent consists of a combination of a physical expansion agent and a chemical expansion agent.

10. The process as claimed in any one of the preceding claims, in which the physical expansion agent is chosen from alkanes and cycloalkanes containing at least 4 carbon atoms, dialkyl ethers, esters, ketones, acetals, fluoroalkanes, fluoroolefins containing between 1 and 8 carbon atoms and tetraalkylsilanes containing between 1 and 3 carbon atoms in the alkyl chain, in particular tetramethylsilane, or a mixture thereof.

11. The process as claimed in any one of the preceding claims, in which the chemical expansion agent consists of water.

12. The process as claimed in any one of the preceding claims, in which the reagents include:
- an isocyanate component including one or more isocyanate compounds, said isocyanate compounds having a viscosity of between 100 and 3000 mPa.s at room temperature, and
- a polyol component including one or more polyol compounds, said polyol compounds having a viscosity of between 200 and 3000 mPa.s at room temperature.

13. The process as claimed in claim 12, in which, during step a) of mixing (12) chemical components, nucleation gas is incorporated into the at least one polyol compound, preferably by means of a static/dynamic mixer under a pressure of between 20 and 250 bar, the nucleation gas representing between 0 and 50% by volume of polyol, preferably between 0.05% and 20% by volume relative to the volume of polyol.

14. The process as claimed in any one of the preceding claims, in which, during step a) of mixing (12) the chemical components, the temperature of each of the reagents for the production of polyurethane/polyisocyanurate is between 10°C and 40°C, preferably between 15°C and 30°C.

15. The process as claimed in any one of the preceding claims, in which an organophosphorus-based flame retardant, advantageously triethyl phosphate (TEP), tris(2-chloroisopropyl) phosphate (TCPP), tris(1,3-dichloroisopropyl) phosphate (TDCP), tris(2-chloroethyl) phosphate or tris(2,3-dibromopropyl) phosphate, or a mixture thereof, or an inorganic flame retardant, advantageously red phosphorus, expandable graphite, an aluminum oxide hydrate, an antimony trioxide, an arsenic oxide, an ammonium polyphosphate, a calcium sulfate or cyanuric acid derivatives, or a mixture thereof, is also added to the mixture (12) in step a).

16. The process as claimed in any one of the preceding claims, in which the fibers (10) represent between 2% and 30% by mass of said mixture (12) of components.

17. A system for preparing a block of fiberized polyurethane/polyisocyanurate foam of a heat-insulating slab (30) that is suitable for a leaktight and heat-insulating tank, for the implementation of the process as claimed in any one of the preceding claims, including:
- a reaction device receiving chemical components required for obtaining a polyurethane/polyisocyanurate foam, said chemical components including reagents for obtaining polyurethane/polyisocyanurate, at least one swelling agent consisting of a physical and/or chemical expansion agent and optionally at least one reaction catalyst and/or one emulsifier,
- a distributor for applying said components to achieve controlled liquid distribution on fibers (10) placed on a conveyor belt, for the impregnation of these fibers with these components,
- a conveyor belt for receiving and transporting the abovementioned components and the fibers (10) from the impregnation of these fibers (10) with said components up to the formation of the block of fiberized polyurethane/polyisocyanurate foam, the block of fiberized polyurethane/polyisocyanurate foam formed being in the form of a parallelepiped with a thickness E and a width L,
- a double-belt laminator forming a tunnel, of rectangular cross section with a distance between the walls arranged laterally equal to L and a distance between the walls arranged horizontally equal to E, thus enclosing the fiberized foam undergoing expansion so as to obtain the block of fiberized polyurethane/polyisocyanurate foam,
in which the positioning of the walls of the tunnel of the double-belt laminator is defined from a law of evolution of the expansion volume, so that the expansion constraint on the fiberized polyurethane/polyisocyanurate foam leads to a volume of fiberized polyurethane/polyisocyanurate foam, exiting the double-belt laminator, representing between 92% and 99%, preferably between 95% and 99% of the expansion volume of this same fiberized polyurethane/polyisocyanurate foam in the case of free expansion, without the constraint of the walls of a double-belt laminator.

18. A block of fiberized polyurethane/polyisocyanurate foam of a heat-insulating slab (30) that is suitable for a leaktight and heat-insulating tank, obtained directly by means of the process as claimed in any one of claims 1 to 16 without subsequent shaving, the block of fiberized polyurethane/polyisocyanurate foam containing between 1% and 60% by mass of fibers (10), preferably between 2% and 30%, uniformly distributed in said block, having a width L of at least 10 cm, advantageously between 10 and 500 cm, and a thickness E of at least 10 cm, advantageously between 10 and 100 cm, the block of fiberized polyurethane/polyisocyanurate foam being composed of closed cells (20) stockpiling a gas,
the volume of which represents between 92% and 99%, preferably between 95% and 99%, of the expansion volume of this same fiberized polyurethane/polyisocyanate foam in the case of free expansion, without the constraint of the walls of a double-belt laminator forming a tunnel of rectangular cross section, and in that at least 60%, preferably at least 80% and more preferably at least 90% of said cells (20) stockpiling a gas have a form that is elongated or stretched along an axis parallel to the axis of the thickness E of the block of fiberized polyurethane/polyisocyanurate foam.

19. The block of fiberized polyurethane/polyisocyanurate foam as claimed in the preceding claim, in which the mass per unit volume of said block is between 50 and 300 kg/m³, preferably between 70 and 170 kg/m³.

20. A leaktight and heat-insulating tank integrated into a support structure, including a leaktight and heat-insulating tank comprising at least one leaktight metal membrane composed of a plurality of metal strakes (1, 2) or metal plates which may include corrugations and a heat-insulating slab (30) including at least one heat-insulating barrier (5) adjacent to said membrane,
**characterized in that** the heat-insulating slab includes the block of fiberized polyurethane/polyisocyanurate foam as claimed in claim 18 or 19.

21. A ship (70) for transporting a cold liquid product, the ship including a double hull (72) and a leaktight and heat-insulating tank (71) as claimed in claim 20, arranged in the double hull.
